(19) Europäisches Patentamt
European Patent Office
Office européen des brevets

(11) **EP 2 077 410 B1**

(12) **EUROPÄISCHE PATENTSCHRIFT**

(45) Veröffentlichungstag und Bekanntmachung des Hinweises auf die Patenterteilung:
**28.11.2012 Patentblatt 2012/48**

(51) Int Cl.:
*F16L 19/02* *(2006.01)*   *F16L 19/04* *(2006.01)*
*F16L 21/03* *(2006.01)*   *F16L 21/035* *(2006.01)*
*F16J 15/00* *(2006.01)*   *F16J 15/06* *(2006.01)*

(21) Anmeldenummer: **08170565.9**

(22) Anmeldetag: **03.12.2008**

(54) **Verbindungssystem für fluidführende Systeme**

Connection system for fluid conveying systems

Système de connexion pour systèmes de transport de fluide

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **02.01.2008 DE 202008000145 U**

(43) Veröffentlichungstag der Anmeldung:
**08.07.2009 Patentblatt 2009/28**

(73) Patentinhaber: **Voss Automotive GmbH**
**51688 Wipperfürth (DE)**

(72) Erfinder:
• **Schwarzkopf, Otfried**
**51515 Kürten (DE)**
• **Mitterer, Reiner**
**51688 Wipperfürth (DE)**

(74) Vertreter: **Patentanwälte**
**Dr. Solf & Zapf**
**Schloßbleiche 20**
**42103 Wuppertal (DE)**

(56) Entgegenhaltungen:
EP-A- 1 335 161    EP-A- 1 548 348
WO-A-2006/051071   DE-C1- 19 809 313
FR-A- 2 829 219    US-A1- 2005 046 187

• ASHBY D M ET AL: "ELASTOMER DEVELOPMENTS FOR SEALING AUTOMOTIVE CLIMATE CONTROL SYSTEMS USING CARBON DIOXIDE" SAE AUTOMOTIVE ALTERNATE REFRIGERANT SYSTEMS SYMPOSIUM, XX, XX, 1. Juli 2002 (2002-07-01), Seiten 1-29, XP001169121

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verbindungssystem für fluidführende Systeme, wie Leitungen, Armaturen oder Aggregate, die zur Führung eines mit einem gegenüber einem Vergleichsdruck erhöhten Druck beaufschlagten Fluids bestimmt sind, insbesondere für Kohlendioxid führende Systeme, nach dem Oberbegriff des Anspruchs 1, umfassend ein erstes Kupplungsteil, wie ein Gehäuseteil, ein entlang einer Achse in eine Aufnahmeöffnung des ersten Kupplungsteils mit einem Schaft einsteckbares zweites Kupplungsteil, wie ein Steckerteil, und mindestens eine aus einem Elastomer bestehende Umfangsdichtung, die in einem Aufnahmeraum angeordnet ist, welcher umfangsgemäß in einem der beiden Kupplungsteile ausgebildet ist und in axialer Richtung einendig durch eine Ringstufe des den Aufnahmeraum ausbildenden Kupplungsteiles begrenzt ist, wobei für die Umfangsdichtung in dem Aufnahmeraum ein Kompensationsvolumen für eine reversible oder irreversible Zunahme der axialen Länge der Umfangsdichtung vorhanden ist. In dem Aufnahmeraum befindet sich dabei eine Ringanordnung, welche in einer Öffnung desselben angeordnet und mit dem den Aufnahmeraum ausbildenden Kupplungsteil kraft- und/oder formschlüssig verbunden ist.

Verbindungssysteme für fluidführende Systeme sind in vielerlei Ausführungen und für verschiedene Anwendungsgebiete bekannt. So beschreibt die EP-A-1 351 006 - und ähnlich auch die US-A-5 161 834 - ein Aufnahmeteil einer bekannten Fluid-Steckkupplung, das insbesondere zur Aufnahme eines genormten Steckerteiles, eines sogenannten SAE-Steckers, konzipiert ist. Bei diesem Stecker handelt es sich um ein Rohrstück, welches zur Bildung einer radialen Haltestufe auf seinem Außenumfang einen Ringkragen aufweist. Unter "Fluid" wird dabei ein beliebiges, hydraulisches oder gasförmiges Strömungsmedium verstanden. Das bekannte Aufnahmeteil besteht aus einem Muffengehäuse mit einer Einstecköffnung für das Steckerteil und mit einer Halteeinrichtung zum lösbaren Fixieren des eingesteckten Steckerteiles. Dabei weist die Halteeinrichtung ein in dem Muffengehäuse gelagertes Halteelement mit radial elastisch verformbaren Halteabschnitten zum rastenden Hintergreifen einer radialen Haltestufe des Steckerteiles sowie ein über Rastmittel relativ zu dem Muffengehäuse axial verschiebbar gehaltertes Löseelement auf. Das Löseelement greift mit einem inneren Löseabschnitt in die Einstecköffnung ein und wirkt zum Lösen gegen die Halteabschnitte des Halteelementes. Zur Erzielung einer einfachen und kostengünstigen Herstellbarkeit bei dennoch sicherer Funktionserfüllung ist dabei vorgesehen, dass die das Löseelement halternden Rastmittel am äußeren Umfang des Muffengehäuses angeordnet sind. Innerhalb des Muffengehäuses kann zum umfänglichen Abdichten auf dem Außenumfang des eingesteckten Steckerteiles eine Dichtungsanordnung vorgesehen sein, die aus zwei Dichtringen und einem zwischen diesen angeordneten Distanzring besteht. Die Dichtungsanordnung wird in dem Muffengehäuse axial in Stecker-Entnahmerichtung durch eine Abschlussbuchse gehalten, wobei diese Abschlussbuchse ihrerseits über Arretiermittel unmittelbar im Muffengehäuse axial fixiert gehalten ist. Zum Halten der Abschlussbuchse können ein formschlüssiger Eingriff der Abschlussbuchse in das Muffengehäuse und gleichzeitig eine abstützende Anlage des Ringkragens des Steckers an der Abschlussbuchse vorgesehen sein. Durch die Dichtungsanordnung sind die Dichtringe sowohl hinsichtlich des Muffengehäuses als auch hinsichtlich des Steckerteiles axial unbeweglich fixiert. Die aus der EP-A-1 351 006 und US-A-5 161 834 bekannten, nicht gattungsgemäßen Fluid-Steckkupplungen stellen Systeme dar, die zur Herstellung einer permeationsarmen Kupplungs-Verbindung für $CO_2$-führende Systeme nicht geeignet sind, weil diese Systeme keine hohen radialen Verpressungen erlauben. Bei hohen Drücken und Temperaturen kann u. a. auch deswegen keine optimale Gasdichtheit erzielt werden, weil das Muffengehäuse und das darin axial verschiebbar gehalterte Löseelement sich in unerwünschter Weise deformieren können.

Ein Verbindungssystem für fluidführende Systeme - ähnlich dem der eingangs genannten Art - ist aus der WO-A-2006/051071 bekannt. Bei diesem bekannten Verbindungssystem ist der Aufnahmeraum, welcher umfangsgemäß in einem der beiden Kupplungsteile ausgebildet ist und welcher die aus einem Elastomer bestehende Umfangsdichtung aufnimmt, eine Nut, die umfangsgemäß in einem der beiden Kupplungsteile ausgebildet ist und einen Nutgrund sowie zwei Nutflanken aufweist. Eine der Nutflanken bildet dabei die den Aufnahmeraum in axialer Richtung einendig begrenzende Ringstufe. Der WO-A-20061051071 liegt dabei das Problem zu Grunde, ein Verbindungssystem zu schaffen, das bei Gewährleistung einer geringen Menge des durch die Umfangsdichtung durchgesetzten Fluids im Betriebszustand eine hohe Funktionssicherheit sowie bei der Herstellung der Kupplungsverbindung eine erhöhte Montagefreundlichkeit besitzt. Letzteres beinhaltet insbesondere, zu unterbinden, dass die Umfangsdichtung bei der Montage wegen jeweils - in Bezug auf minimale Permeation bewusst gewählter - großer Anpresskraft und Kontaktlänge nach relativ kurzer Zeit mit den Anlageflächen der Kupplungsteile, insbesondere an ihrem Außenumfang mit einem Innenumfang des als Gehäuseteils ausgebildeten Kupplungsteils, aufgrund eines Anstiegs der Haftreibungszahl "verklebt". Die WO-A-2006/051071 sieht daher vor, dass in der Nut Mittel zur mechanischen Hemmung einer axialen Bewegung der Umfangsdichtung angeordnet sind, die derart ausgeführt sind, dass die Umfangsdichtung - sowohl, wenn das eine Kupplungsteil mit dem Schaft in die Aufnahmeöffnung des anderen Kupplungsteiles eingesteckt wird, als auch bei einer entgegengesetzt wirkenden relativen Rückbewegung der Kupplungsteile zueinander, in der Position gehalten ist, in der die Umfangsdichtung im Betriebszustand den Spalt der Aufnahmeöffnung verschließt und dabei mit einer axial gerichteten Ablagefläche an einer auf der Seite des abzudichtenden Spaltes liegenden Nutflanke anliegt. Zu einer gegenüber liegenden Nutflanke besteht dabei ein Abstand, so dass die Umfangsdichtung asymmetrisch in der Nut angeordnet ist und so ein Kompensationsvolumen für eine reversible oder irreversible Zunahme der axialen Länge der Umfangsdichtung vorhanden ist.

Die EP-A-1 335 161 beschreibt ein Aufnahmeteil eines bekannten, als gattungsbildend herangezogenen Verbindungssystems, das insbesondere zur Aufnahme eines genormten Steckerteiles, eines sogenannten SAE-Steckers, konzipiert ist. Bei diesem Stecker handelt es sich um ein Rohrstück, welches zur Bildung einer radialen Haltestufe auf seinem Außenumfang einen Ringansatz aufweist. Das bekannte Aufnahmeteil besteht aus einem Muffengehäuse mit einer Einstecköffnung für das Steckerteil und weist eine Halteeinrichtung zum lösbaren Fixieren des eingesteckten Steckerteiles auf. Innerhalb des Muffengehäuses kann zum umfänglichen Abdichten auf dem Außenumfang des eingesteckten Steckerteiles eine Dichtungsanordnung vorgesehen sein, die aus zwei Dichtringen und einem zwischen diesen angeordneten Distanzring besteht. Die Dichtungsanordnung wird in dem Muffengehäuse axial in Stecker-Entnahmerichtung durch eine Abschlussbuchse gehalten, wobei diese Abschlussbuchse ihrerseits über Arretiermittel unmittelbar im Muffengehäuse axial fixiert gehalten ist. Zum Halten der Abschlussbuchse können ein formschlüssiger Eingriff der Abschlussbuchse in das Muffengehäuse und gleichzeitig eine abstützende Anlage des Ringansatzes des Steckers an der Abschlussbuchse vorgesehen sein. Durch die Dichtungsanordnung sind die Dichtringe sowohl hinsichtlich des Muffengehäuses als auch hinsichtlich des Steckerteiles axial unbeweglich fixiert. Um das Einsetzen der Abschlussbuchse in das Muffengehäuse zu erleichtern, weist die Abschlussbuchse zumindest einseitig eine Fase als Einführschräge auf. Der neben dieser Einführschräge liegende Dichtring kann sich geringfügig in diese Schräge hinein verformen. Diese Deformation ist jedoch nur als marginal anzusehen und bewirkt keine Kompensation einer im Betriebszustand auftretenden reversiblen oder irreversiblen Zunahme der axialen Länge der Umfangsdichtung. Das Problem einer solchen Längenzunahme und Notwendigkeit der Kompensation ist in der EP 1 335 161 A1 nicht angesprochen. Darüber hinaus stellt die aus der EP 1 335 161 A1 bekannte Fluid-Steckkupplung kein System dar, das zur Herstellung einer permeationsarmen Kupplungs-Verbindung für $CO_2$-führende Systeme geeignet wäre, da dieses System keine hohen radialen Verpressungen erlaubt. Bei hohen Drücken und Temperaturen kann u. a. auch deswegen keine optimale Gasdichtheit erzielt werden, weil das Muffengehäuse und das darin axial verschiebbar gehaltene Löseelement sich in unerwünschter Weise deformieren können.

Etwas Ähnliches liegt auch bei der EP 1 548 348 A1 vor. Dieses Dokument beschreibt eine Dichtungsanordnung für einen Anschluss einer Leitung an ein Bauteil, insbesondere an ein Expansionsventil einer Kraftfahrzeug-Klimaanlage, wobei zwei oder mehr Dichtelemente zwischen der Leitung und dem Bauteil vorgesehen sind. Gemäß einem Ausführungsbeispiel ist die Leitung spanabhebend derart bearbeitet, dass sie mehrere Stufen mit zum Ende hin abnehmendem Außendurchmesser aufweist. Hierbei ist endseitig, das heißt auf der Stufe mit dem kleinsten Außendurchmesser, ein erster O-Ring angeordnet, welcher mittels eines Hilfselements positioniert ist. Das Hilfselement ist zylinderförmig ausgebildet, wobei zwischen der Stufe mit dem kleinsten Außendurchmesser und dem Hilfselement kleine Hinterschneidungen vorgesehen sind, so dass das Hilfselement reib- und formschlüssig auf der Leitung sitzt. Alternativ kann das Hilfselement beispielsweise auch aufgeschrumpft oder mittels Kleben an der Leitung befestigt werden. Der erste O-Ring wird hierbei in radialer Richtung gegen den im Wesentlichen zylinderförmigen Teil der Öffnung gepresst. Ein zweiter O-Ring, welcher einen größeren Durchmesser als der erste O-Ring aufweist, ist stirnseitig in einer Ringnut angeordnet, die im Expansionsventil ausgebildet ist und von einem Flansch der Leitung verschlossen wird. Dabei wird er in axialer Richtung gegen das Expansionsventil gepresst. Durch die Fixierung des Hilfselements und die Anpressung wird der erste O-Ring komprimiert, und es steht ihm keinerlei Kompensationsvolumen für eine reversible oder irreversible Zunahme seiner axialen Länge zur Verfügung. Das Problem einer reversiblen oder irreversiblen Zunahme der axialen Länge einer Umfangsdichtung ist in diesem Dokument nicht angesprochen.

Der vorliegenden Erfindung liegt die Aufgabe zu Grunde, ein Verbindungssystem für fluidführende Systeme, wie Leitungen, Armaturen oder Aggregate der eingangs beschriebenen Art zu schaffen, welches bei Wahrung einer vorteilhaft niedrigen Fluid-Permeation, insbesondere der Gewährleistung einer geringen Menge von durch die Umfangsdichtung durchgesetztem Kohlendioxid, und einer hohen Funktionssicherheit sowie der bekannten Montagevorteile bei der Herstellung der Kupplungsverbindung eine noch größere Montagefreundlichkeit und einen konstruktiv einfacheren Aufbau besitzt.

Erfindungsgemäß wird dies dadurch erreicht, dass das Kompensationsvolumen von der Ringanordnung bereitgestellt wird, indem ein von einer Ringstufe eines Ringelements der Ringanordnung begrenzter Ringraum im Aufnahmeraum ein Teilvolumen des Aufnahmeraums als Kompensationsvolumen bildet, und/oder indem ein axial verschieblicher, der Ringanordnung zugehöriger Abstandsring und/oder ein der Ringanordnung zugehöriger Kompensationsring bei einer axialen Verschiebung gegen eine axiale Vorpresskraft eines elastischen Federelementes als Kompensationsvolumen ein Teilvolumen des Aufnahmeraums freigibt. Unter "bereitgestellt" wird dabei also im Rahmen der Erfindung verstanden, dass das Kompensationsvolumen im Aufnahmeraum direkt an der Ringanordnung ausgebildet ist und/oder durch eine axiale Verschiebung innerhalb der Ringanordnung freigegeben wird.

Das erfindungsgemäße Verbindungssystem ist dabei in ausgezeichneter Weise for den Einsatz im Kühlkreislauf von Kraftfahrzeug-Klimaanlagen geeignet Eine solche Anlage stellt ein spezielles System dar, welches zur Führung eines mit einem Druck beaufschlagten Fluids bestimmt und sehr hohen technischen Anforderungen unterworfen ist. Da alle organischen Stoffe, wie Polymere, gasdurchlässig sind, kommt es dabei hauptsächlich infolge von Permeation durch die Umfangsdichtung zu einem unvermeidbaren Fluidstrom des Kältemittels vom Raum des höheren in den Raum des niedrigeren Drucks. Die Leckmenge aufgrund von Permeation wird dabei durch die Betriebsbedingungen, wie Druck und Temperatur, die Permeabilität der eingesetzten Elastomerdichtungen, die Dichtungsgeometrie und die Art des Kältemittels bestimmt. In einem solchen Kühlsystem werden bisher verschiedene Halogen-Kohlenwasserstoff Verbindungen, wie insbesondere ein unter dem Namen R134a bekanntes, hauptsächlich aus Tetrafluoräthan bestehendes Kältemittel, eingesetzt. Gegenwärtig werden jedoch aus Umwettschutzgründen umfangreiche technische Entwicklungsarbeiten durchgeführt, um das genannte Kältemittel R134a zu ersetzen, weil es ein sehr hohes Treibhauspotenzial besitzt. Dieses Treibhauspotenzial wird dabei in der dimensionslosen Kennzahl GWP (Global Warming Potential) angegeben und unter Normbedingungen bestimmt. Im Hinblick auf eine Eindämmung des Treibhauseffekts werden in Europa gesetzliche Vorschriften diskutiert, die den zulässigen GWP-Grenzwert beschränken sollen, wobei dieser kleiner als 150 oder sogar kleiner als 50 sein soll. Da R134a einen GWP-Wert von 1300 besitzt, ergibt sich daraus wahrscheinlich in naher Zukunft ein vollständiges Verbot dieses Kältemittels. Ein dabei bevorzugt zur Substitution von R134a vorgesehenes Kältemittel, bei dem es sich chemisch gesehen um Kohlendioxid handelt, heißt R744 und besitzt einen GWP-Wert von nur 1. Dabei ist ein R744-Kältemittelkreislauf in Analogie zu einem R134a-Kreislauf aufgebaut, wobei jedoch vier wichtige Unterschiede zu beachten sind: Zunächst sind die Betriebsdrücke bei R744 etwa fünfmal höher als bei R134a, so dass bei Betrieb einer $CO_2$-Klimaanlage für den auftretenden Druck ein oberes Niveau von etwa 160 bar und ein unteres Niveau von etwa 35 bar charakteristisch ist. Des Weiteren muss bei der technischen Gestaltung der Fluidsysteme einem auf viele Dichtungselastomere lösend bzw. strukturzersetzend wirkenden Einfluss von R744 Rechnung getragen werden, was das erfindungsgemäße System gewährleistet. Drittens kommt - thermodynamisch gesehen

- die sogenannte kritische Temperatur im Zustandsdiagramm von Gasen hinzu, die für R744 etwa 31 °C beträgt. Daraus ergibt sich, dass R744 an heißen Tagen durch die Außenluft nicht mehr verflüssigt werden kann und deshalb anstelle des bisher üblichen Kondensators ein Gaskühler eingesetzt werden muss. Viertens benötigen R744-Kältekreisläufe schließlich einen zusätzlichen inneren Wärmetauscher, um die Leistung und den Wirkungsgrad des Kältekreislaufs anzuheben. Wenngleich die beiden letztgenannten Unterschiede im Hinblick auf das erfindungsgemäße Verbindungssystem von untergeordneter Bedeutung sind, ist jedoch hervorzuheben, dass das erfindungsgemäße Verbindungssystem bei Einsatz des Kältemittels R744 eine extrem hohe Dichtheit gewährleistet, so dass es auch unter umwelttechnischen Gesichtspunkten als äußerst vorteilhaft zu bewerten ist. Insbesondere ist es möglich, dass ein Wert der Menge des in Folge von Permeation durch die Umfangsdichtung durchgesetzten Fluids etwa 2,5 g pro Jahr und Verbindung, vorzugsweise 1 g pro Jahr und Verbindung, nicht überschreitet. Hinsichtlich einer zur Bestimmung dieses Wertes einsetzbaren Apparatur wird auf die eingangs genannte WO-A-2006/051071 verwiesen.

Erfindungsgemäß sind vorteilhafterweise Mittel zur mechanischen Hemmung einer axialen Bewegung der Umfangsdichtung, wie sie bekanntermaßen im Stand der Technik vorgesehen und vorstehend beschrieben sind, nicht notwendig. Der konstruktive Aufwand bei der Herstellung der Kupplungteile reduziert sich somit. Auch eine Nut zur Aufnahme der Umfangsdichtung ist im Kupplungsteil vorteilhafterweise nicht vorgesehen. Durch einen nahezu vollständigen Verschluss der der Ringstufe im Aufnahmeraum anderendig gegenüber liegenden Öffnung des Aufnahmeraumes mittels des Ringelementes, das die Umfangsdichtung festhält, sind Beschädigungen, wie sie beim Einlegen bzw. Einpressen der Umfangsdichtung in eine Nut auftreten, ausgeschlossen.

Eine unter Deformation der Umfangsdichtung erfolgende Aufbringung einer optional vorgesehenen axialen Vorpresskaft bzw. axialen Vorspannnung kann dabei problemlos erfolgen, da das Ringelement beim Einlegen leicht in Anlage mit der Umfangsdichtung gebracht und dann zur Erzeugung der Vorpresskraft angedrückt werden kann, wobei dieser Zustand durch die abschließende kraft- und/oder formschlüssige lösbare Verbindung des Ringelements mit dem den Aufnahmeraum ausbildenden Kupplungsteil, die eine axiale Rückbewegung von Umfangsdichtung und Ringelement hemmt, auch in einfacher Weise fixiert werden kann. Dadurch wird die Umfangsdichtung im Einbauraum fest positioniert, wobei ein Axialspiel der Umfangsdichtung vollständig bzw. zumindest nahezu vollständig ausgeschlossen ist.

Im Rahmen der Erfindung sind dabei unterschiedliche Ausführungsformen - beispielsweise mit einer oder zwei axial hintereinander angeordneten Umfangsdichtungen und/oder mit Ausbildung des Aufnahmeraums entweder im Gehäuse- oder im Steckerteil - möglich. Dabei ist in jedem Fall die erforderliche Gasdichtheit und hohe Funktionalität des erfindungsgemäßen Verbindungssystems gewahrt, weil die Umfangsdichtung jeweils über eine große in axialer Richtung verlaufende Kontaktlänge an den Kupplungsteilen anliegen kann, der Fluidkontakt mit der Dichtung, insbesondere durch einen nur an dem zu verschließenden Spalt erfolgenden Gasein- oder -austritt, stark eingeschränkt ist und vor allem, weil eine, vorzugsweise durch die Vorpresskraft fixierte, definierte Einbaulage der Umfangsdichtung vorliegt.

In der Ringanordnung ist ein Kompensationsvolumen an einem ringförmigen Teil, wie an einem Ringelement, einem Abstandsring oder einem Kompensationsring, als Teilvolumen des Aufnahmeraums für die reversible oder irreversible Zunahme der axialen Länge der Umfangsdichtung ausgebildet. In einem solchen Kompensationsvolumen der Ringanordnung kann vorteilhafterweise ein Volumenanteil der Dichtung, der bei einer Volumenvergrößerung der Umfangsdichtung, wie sie im Betriebszustand bei einer gegenüber der Raumtemperatur erhöhten Temperatur oder durch Quellung unter dem Einfluss des Fluids oder infolge des erhöhten Drucks auftritt, aufgenommen werden.

Vor Eintritt des Betriebszustandes kann bzw. sollte nach Abschluss der Montage aber auch bereits ein Volumenanteil der Dichtung in diesem ersten Kompensationsvolumen aufgenommen werden, der durch die Deformation der Umfangsdichtung unter dem Einfluss der radialen und ggf. axialen Vorpresskräfte auftritt. Das erste Kompensationsvolumen kann bzw. sollte daher bevorzugt - sei es im Montagezustand, sei es im Betriebszustand - immer mehr oder weniger ausgefüllt sein. Sein Füllungsgrad ist dann größer als Null. Die Eigenelastizität der elastomeren Umfangsdichtung kann dabei im Sinne einer den Vorpresskräften entgegenwirkenden Feder wirken.

In einer zweiten grundlegenden bevorzugten Ausführungsform der Erfindung kann insbesondere vorgesehen sein, dass in der Ringanordnung ein gegen ein zusätzliches elastisches Federelement, das die axiale Vorpresskraft erzeugt, axial verschiebliches ringförmiges Teil, wie es im Weiteren als Kompensationsring beschrieben wird, angeordnet ist, das als Teilvolumen des Aufnahmeraums ein Kompensationsvolumen für die reversible oder irreversible Zunahme der axialen Länge freigibt. Auch in diesem Kompensationsvolumen kann ein Volumenanteil der Dichtung, der bei einer Volumenvergrößerung der Umfangsdichtung, wie sie im Betriebszustand bei einer gegenüber der Raumtemperatur erhöhten Temperatur oder durch Quellung unter dem Einfluss des Fluids oder durch den erhöhten Drucks auftritt, aufgenommen werden, wobei vorteilhafterweise im reversiblen Fall einer Volumenverkleinerung der Umfangsdichtung durch eine Änderung der genannten Einflussfaktoren sich unter der Wirkung des Federelementes das Kompensationsvolumen wieder verschließt.

In weiteren erfindungsgemäß bevorzugten Einsatzfällen, die mit der ersten oder zweiten grundlegenden bevorzugten Ausführungsform der Erfindung kombinierbar sind, kann vorgesehen sein, dass im Aufnahmeraum zwei Umfangsdichtungen axial hintereinander angeordnet und durch einen dazwischen angeordneten, axial verschieblichen Abstandsring - als ringförmigem Teil der Ringanordnung - voneinander getrennt sind. Hierbei ist es in Analogie zur Freigabe des Kompensationsvolumens durch den Kompensationsring möglich, dass der Abstandsring bei seiner axialen Verschiebung als Teilvolumen des Aufnahmeraums ebenfalls ein Kompensationsvolumen für die reversible oder irreversible Zunahme der axialen Länge der Umfangsdichtungen freigibt.

In Analogie zur Ausbildung des Kompensationsvolumens am Ringelement kann auch vorgesehen sein, dass am Abstandsring selbst - als Teilvolumen des Aufnahmeraums - ein Kompensationsvolumen für die reversible oder irreversible Zunahme der axialen Länge der Umfangsdichtungen konstruktiv ausgebildet ist.

Weitere vorteilhafte Ausgestaltungsmerkmale der Erfindung sind in den Unteransprüchen sowie der folgenden Beschreibung enthalten.

Anhand mehrerer bevorzugter Ausführungsbeispiele soll im Folgenden die Erfindung näher erläutert werden. Dabei zeigen:

Fig. 1      einen axial geführten Halbschnitt durch ein erfindungsgemäßes Verbindungssystem in einer ersten Ausführung,

Fig. 2      in einer Darstellung wie in Fig. 1, ein erfindungsgemäßes Verbindungssystem in einer zweiten Ausführung,

Fig. 3      in einer Darstellung wie in Fig. 1 und 2, ein erfindungsgemäßes Verbindungssystem in einer dritten Ausführung,

Fig. 4      in vergrößerter Darstellung die in Fig. 3 mit IV bezeichnete Einzelheit,

Fig. 5      in einer Darstellung wie in Fig. 1 bis 3, ein erfindungsgemäßes Verbindungssystem in einer vierten Ausführung,

Fig. 6      einen axial geführten Halbschnitt durch eine bevorzugte Ausführung eines erfindungsgemäß vorgesehenen Ringelementes,

Fig. 7      einen axial geführten Halbschnitt durch ein erfindungsgemäßes Verbindungssystem in einer fünften Ausführung,

Fig. 8 einen axial geführten Halbschnitt durch ein erfindungsgemäßes Verbindungssystem in einer sechsten Ausführung,

Fig. 9 in einer Darstellung wie in Fig. 7, ein erfindungsgemäßes Verbindungssystem in einer siebenten Ausführung,

Fig. 10 in einer Darstellung wie in Fig. 4 die in Fig. 8 mit IX bezeichnete Einzelheit,

Fig. 11 in einer Darstellung wie in Fig. 7 und 8, ein erfindungsgemäßes Verbindungssystem in einer achten Ausführung,

Fig. 12 bis 14 einen Halbschnitt durch ein erfindungsgemäßes Verbindungssystem zur Veranschaulichung des Ablaufs seiner Montage,

Fig. 15 und 16 als Alternative zu Fig. 6, einen Längsschnitt und eine Stirnansicht einer weiteren bevorzugten Ausführung eines erfindungsgemäß vorgesehenen Ringelementes,

Fig. 17 einen Halbschnitt durch ein erfindungsgemäßes Verbindungssystem in einer neunten Ausführung mit einem anderen Ringelement als in Fig. 15 und 16 und ohne erstes Kupplungsteil,

Fig. 18 einen Längsschnitt durch eine für ein erfindungsgemäßes Verbindungssystem einsetzbare Montagevorrichtung,

Fig. 19 und 20 Schnittdarstellungen von in einem erfindungsgemäßen Verbindungssystem einsetzbaren Umfangsdichtungen zur Veranschaulichung der in ihnen auftretenden mechanischen Spannungen.

In den verschiedenen Figuren der Zeichnung sind gleiche Teile stets mit den gleichen Bezugszeichen versehen. Jede eventuell nur einmal unter Bezugnahme auf nur eine oder einen Teil der Zeichnungsfiguren vorkommende Beschreibung eines Teils gilt daher analog auch bezüglich der anderen Zeichnungsfiguren, in denen dieses Teil mit dem entsprechenden Bezugszeichen ebenfalls zu erkennen ist.

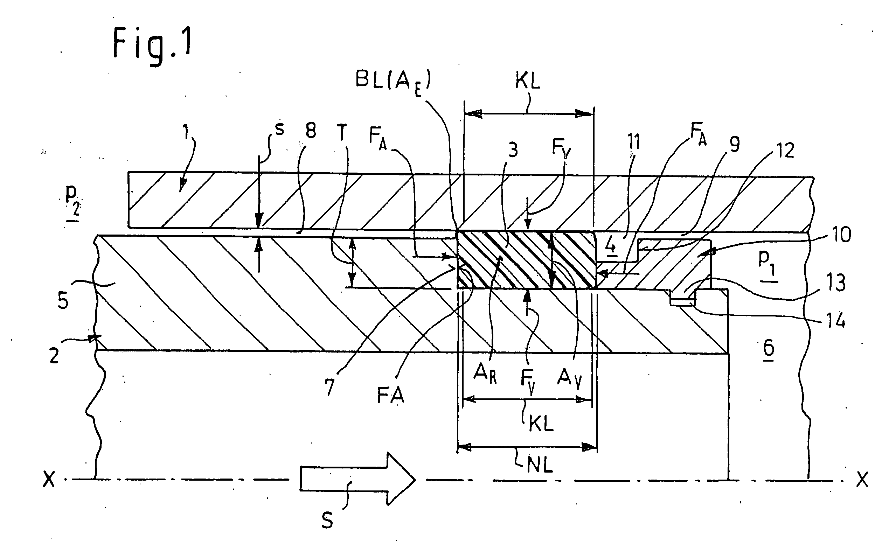

Fig. 1 zeigt zunächst in einer ersten Ausführung ein erfindungsgemäßes Verbindungssystem für fluidführende Systeme, wie Leitungen, Armaturen oder Aggregate, die zur Führung eines mit einem gegenüber einem Vergleichsdruck $p_2$, wie dem Umgebungsdruck, erhöhten Druck $p_1$ beaufschlagten Fluids bestimmt sind.

Das Verbindungssystem, welches insbesondere für Kohlendioxid führende Systeme konzipiert ist, umfasst ein erstes Kupplungsteil 1, wie dargestellt - ein Gehäuseteil, und ein zweites Kupplungsteil 2, wie dargestellt - ein Steckerteil. Außerdem umfasst das erfindungsgemäße Verbindungssystem mindestens eine aus einem Elastomer bestehende Umfangsdichtung 3, die in einem Aufnahmeraum 4 zwischen dem ersten Kupplungsteil 1 und dem zweiten Kupplungsteil 2 angeordnet ist. Das zweite Kupplungsteil 2 ist mit einem Schaft 5 entlang einer Achse X-X in eine Aufnahmeöffnung 6 des ersten Kupplungsteils 1 einsteckbar. Die Einsteckrichtung ist dabei mit dem Bezugszeichen S bezeichnet.

Der Aufnahmeraum 4 ist umfangsgemäß in einem der beiden Kupplungsteile 1, 2 - in der ersten Ausführung der Erfindung im Stecker-, also im zweiten Kupplungsteil 2 - ausgebildet und ist in axialer Richtung X-X einendig durch eine Ringstufe 7 des den Aufnahmeraum 4 ausbildenden Kupplungsteiles 2 begrenzt. Die Umfangsdichtung 3 nimmt dabei im Betriebszustand eine Position ein, in der sie unter Deformation und Erzeugung einer radialen Vorpresskaft $F_v$ einen Spalt 8 der Aufnahmeöffnung 6 verschließt und dabei über eine in axialer Richtung X-X verlaufende Kontaktlänge KL an den Kupplungsteilen 1, 2 anliegt. Diese Kontaktlänge KL ist aus Gründen der Übersichtlichkeit nur in Fig. 1 bezeichnet. Unter Beachtung der möglichen Wärmeausdehnung der Umfangsdichtung 3 sollte bei der Abdichtung des Spaltes 8 eine Extrusion in den Spalt 8 hinein möglichst vermieden werden.

Sowohl das erste Kupplungsteil 1, also das Gehäuse, als auch das zweite Kupplungsteil 2, also der Stecker, können bevorzugt aus metallischen Werkstoffen, insbesondere aus Aluminium- oder hochlegierten Edelstahllegierungen, bestehen. Die Umfangsdichtungen 3 können beispielsweise aus einer polymeren Fluor-Kohlenstoff verbindung, aus synthetischem Kautschuk, wie Silikonkautschuk, NBR oder H-NBR, PUR, EPDM, SBR, o. ä., bestehen und insbesondere einen hohen Anteil an Füllstoffe aufweisen. Die Shore-A-Härte kann bevorzugt im Bereich von 70 bis 90 liegen.

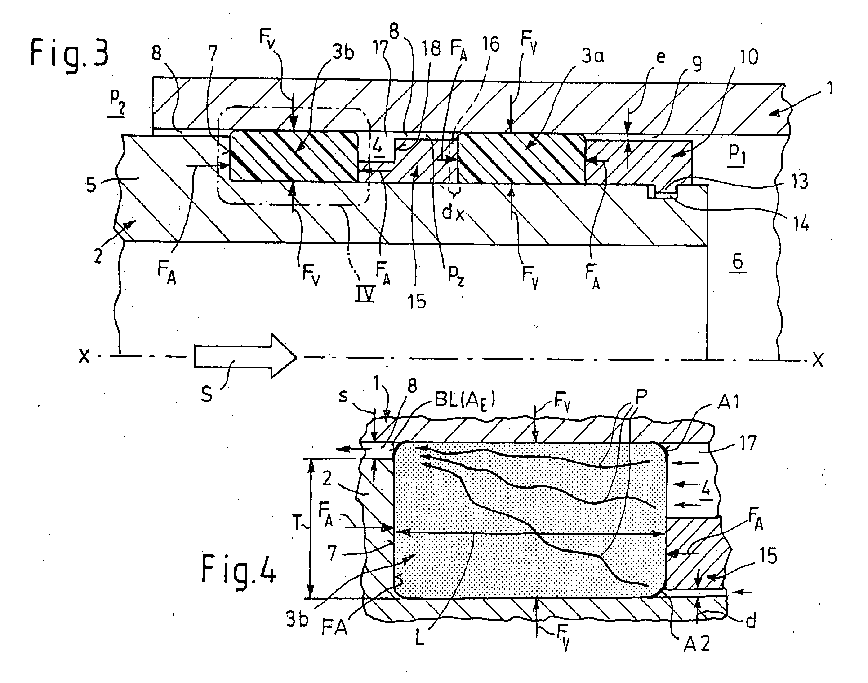

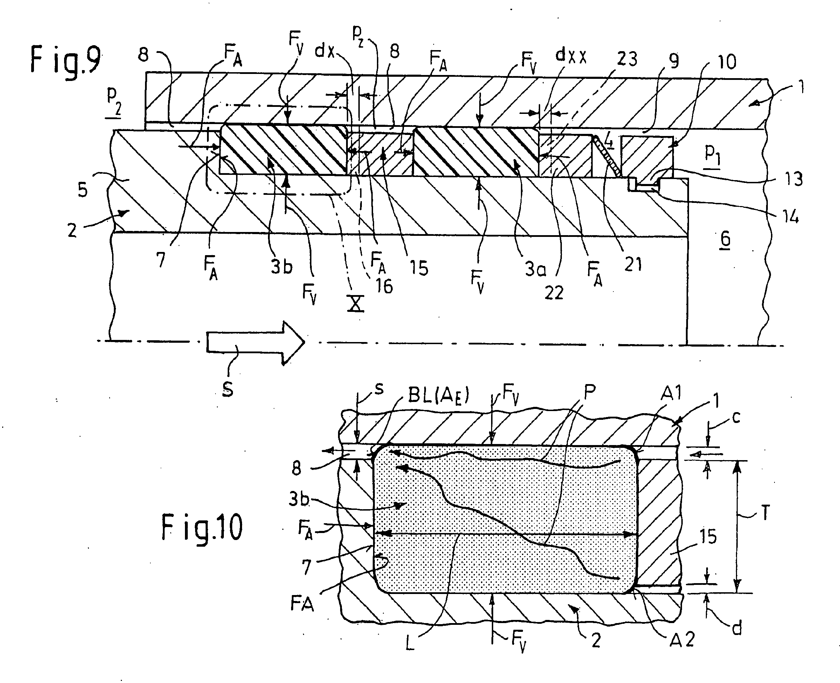

Ein die Permeation durch die Umfangsdichtung 3 bestimmendes Flächen-Permeationslängen-Verhältnis $A_E/KL$ wird durch eine permeationswirksame Teilumfangsfläche $A_E$ der Umfangsdichtung 3 zu der Kontaktlänge KL gebildet. Die Teilumfangsfläche $A_E$ ist in der Nähe des Spaltes 7 angeordnet und wird durch die in Fig. 1 (und auch in Fig. 4 und 10) fett hervorgehobene, insbesondere nicht an den Kupplungsteilen 1, 2 anliegende, Bogenlinie BL der verpressten, radialen Querschnittsfläche $A_R$ der deformierten Umfangsdichtung 3 bestimmt.

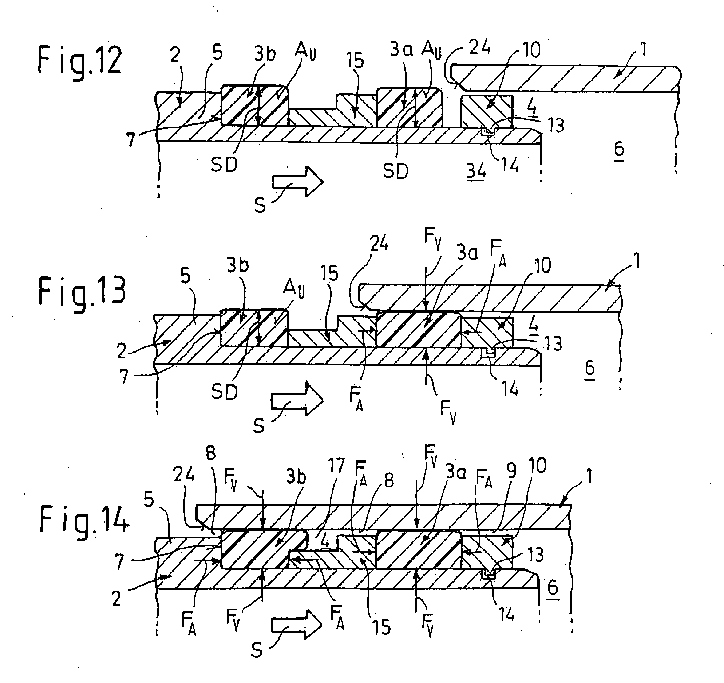

In besonders permeationsminimierender Weise kann dabei ein kleines Verhältnis der senkrecht zur axialen Richtung verlaufenden radialen Querschnittsfläche $A_R$ der deformierten Umfangsdichtung 3 zu der Kontaktlänge KL durch eine (radiale) Verpressung V der Umfangsdichtung 3 in einem Bereich von mehr als 15 Prozent, vorzugsweise von mehr als 25 Prozent, besonders bevorzugt von mehr als 30 Prozent, insbesondere von mehr als 50 Prozent, erzielt werden. Die Verpressung V ergibt sich dabei zu

$$V = 100 \% * (1 - (T + s) / SD)$$

wobei T eine Tiefe T des Aufnahmeraumes 4 (Fig. 1, 4, 10), s die Spaltweite zwischen den Kupplungsteilen 1, 2 (Fig. 1, 4, 10) und SD eine Schnurstärke SD der unverpressten Umfangsdichtung 3 (Fig. 12, 13) ist.

Erfindungsgemäß ist vorgesehen, dass von einer im Aufnahmeraum 4 angeordneten Ringanordnung, die nachfolgend in ihren verschiedenen möglichen Ausführungen im Detail beschrieben wird und die in einer der Ringstufe 7 in axialer Richtung X-X anderendig gegenüber liegenden Öffnung 9 des Aufnahmeraumes 4 angeordnet und mit dem den Aufnahmeraum 4 ausbildenden Kupplungsteil 1, 2 kraft- und/oder formschlüssig verbunden ist, ein Kompensationsvolumen bereitgestellt wird.

So ist zunächst vorgesehen, dass in einer der Ringstufe 7 des den Aufnahmeraum 4 ausbildenden Kupplungsteiles 2 in axialer Richtung X-X anderendig gegenüber liegenden Öffnung 9 des Aufnahmeraumes 4 ein Ringelement 10 der Ringanordnung angeordnet ist, welches mit dem den Aufnahmeraum 4 ausbildenden Kupplungsteil 2 kraft- und/oder formschlüssig lösbar verbunden ist. Das Ringelement 10 kann mit dem den Aufnahmeraum 4 ausbildenden Kupplungsteil 2 insbesondere verrastet sein.

Die Umfangsdichtung 3 ist dabei unter Deformation und vorzugsweise Erzeugung einer axialen Vorpresskaft $F_A$ derart in dem Aufnahmeraum 4 angeordnet, dass eine reversible oder irreversible Zunahme der axialen Länge der Umfangsdichtung 3 gegen die Wirkungsrichtung der axialen Vorpresskraft $F_A$ im Aufnahmeraum 4 möglich ist. (Die axiale Länge der Umfangsdichtung 3 ist nur in den vergrößerten Darstellungen von Fig. 4 und 10, und zwar mit dem Bezugszeichen L bezeichnet.)

Damit die permeationsbestimmende Teilumfangsfläche $A_E$ klein bleibt - insbesondere sollte sie nicht größer sein als der halbe Wert, vorzugsweise nicht größer als ein Fünftel der senkrecht zur axialen Richtung X-X verlaufenden, durch eine Strichlinie in Fig. 1 angedeuteten Querschnittsfläche $A_V$ der deformierten Umfangsdichtung 3 - ist es notwendig, dass die Umfangsdichtung 3 im Betriebszustand im Aufnahmeraum 4 eine Position einnimmt, in der die Umfangsdichtung 3 mit einer axial gerichteten Anlagefläche FA an der Ringstufe 7 des den Aufnahmeraum 4 ausbildenden Kupplungsteiles 2 anliegt. Dies kann erfindungsgemäß durch die axiale Vorpressung in einfacher Weise gesichert werden.

Die Länge der Bogenlinie BL nimmt in dieser Position bei verschwindender Bogenkrümmung im Minimalfall den Wert der Spaltweite s des zu verschließenden Spaltes 8 an. In diesem Fall sind ein Querschnitt $A_U$ der unverpressten Umfangsdichtung 3 (siehe dazu Fig. 12 und 13), die Tiefe T des Aufnahmeraumes 4 und die Spaltweite s sowie eine Länge NL zwischen der Ringstufe 7 des Kupplungsteiles 2 und dem Ringelement 10 derart aufeinander abgestimmt, dass die permeationswirksame Teilumfangsfläche $A_E$ unabhängig von der Schnurstärke SD der unverpressten Umfangsdichtung 3 ist (siehe dazu auch Fig. 12 und 13). Im Maximalfall sollte die Bogenlinie BL nicht länger sein als der halbe Wert, vorzugsweise ein Viertel des Wertes der Summe aus der Spaltweite s und der durch die Ringstufe 7 bestimmten Tiefe T des Aufnahmeraumes 4.

Während die vorstehend erläuterten technischen Merkmale - wenngleich nur in Fig. 1 gekennzeichnet - von allgemeiner Bedeutung für alle Ausführungsformen der Erfindung sind, besteht ein Spezifikum der ersten Ausführung der Erfindung - wie ebenfalls in Fig. 1 gezeigt - darin, dass am Ringelement 10 als Teilvolumen des Aufnahmeraums 4 ein Kompensationsvolumen, welches im Weiteren als erstes Kompensationsvolumen 11 bezeichnet wird, für die reversible oder irreversible Zunahme der axialen Länge L der Umfangsdichtung 3 ausgebildet ist. Wie bereits erwähnt, kann in diesem ersten Kompensationsvolumen 11 ein Volumenanteil der Umfangsdichtung 3, der bei einer Volumenvergrößerung der Umfangsdichtung 3, wie sie durch Wärmeausdehnung, Quellung unter dem Einfluss des Fluids oder ggf. auch durch Druckeinflüsse auftritt, aufgenommen werden.

Im Gegensatz zu der schematisierten Darstellung in Fig. 1 kann bzw. sollte außerdem aber auch schon nach Abschluss der Montage, bevor sich der Betriebszustand einstellt, bereits ein Volumenanteil der Umfangsdichtung 3 in dem ersten Kompensationsvolumen 11 aufgenommen sein. Bei diesem Volumenanteil handelt es sich um den Volumenanteil, der durch die Deformation der Umfangsdichtung 3 unter dem Einfluss der radialen und axialen Vorpresskräfte $F_V$, $F_A$ auftritt. Ein axiales Dichtungsspiel ist dadurch nach der Montage mit Vorteil unterbunden.

Das erste Kompensationsvolumen 11, welches - wie dargestellt - bevorzugt durch einen von einer Ringstufe 12 des Ringelementes 10 begrenzten Ringraum im Aufnahmeraum 4 gebildet ist, ist daher - sei es im Montagezustand, sei es im Betriebszustand des erfindungsgemäßen Systems - immer zumindest teilweise ausgefüllt, wobei sich der Füllungsgrad entsprechend einem aktuellen, beispielsweise durch Druck, Temperatur und Medium bestimmten, Betriebszustand ändern kann.

Das Ringelement 10 kann im Sinne einer radialen Aufweitbarkeit und Zusammendrückbarkeit zur vereinfachten Montage insbesondere in axialer Richtung X-X oder schräg dazu geschlitzt ausgeführt sein, jedoch vorzugsweise so, dass es im montierten Zustand geschlossen ist. Auf diese Weise ist gesichert, dass die anliegende Umfangsdichtung 3 nicht mit einem Spalt im Ringelement 10 in Berührung kommen bzw. darin eingeklemmt oder davon beschädigt werden könnte.

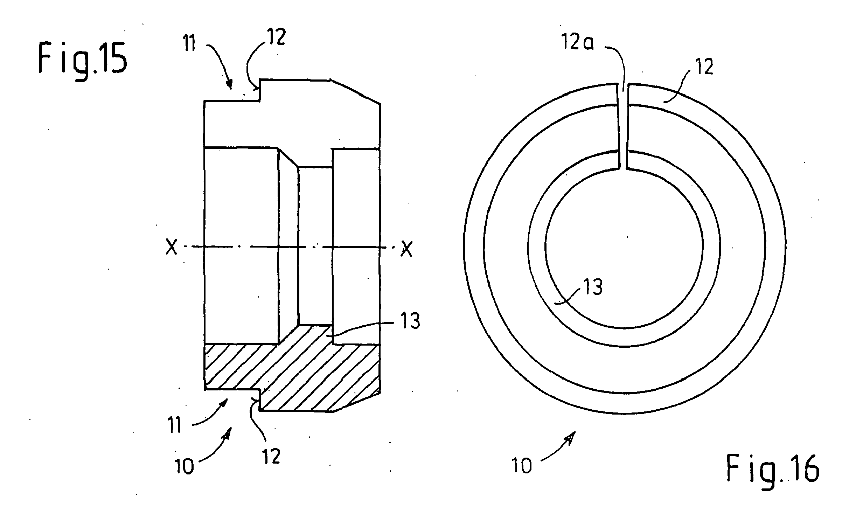

Das Ringelement 10 kann - wie bereits erwähnt - mit dem den Aufnahmeraum 4 ausbildenden Kupplungsteil 2 insbesondere verrastet sein, wozu es - wie dargestellt - ein geeignetes Rastelement 13, wie eine Rastnase, und das Kupplungsteil 2 ein komplementäres Rastelement 14, wie eine Rastnut, aufweisen kann. Eine vergrößerte Darstellung des Ringelementes 10 als Einzelteil ist auch Fig. 15 und 16 zu entnehmen. Der erwähnte Spalt ist dabei in Fig. 16 mit dem Bezugszeichen 12a bezeichnet.

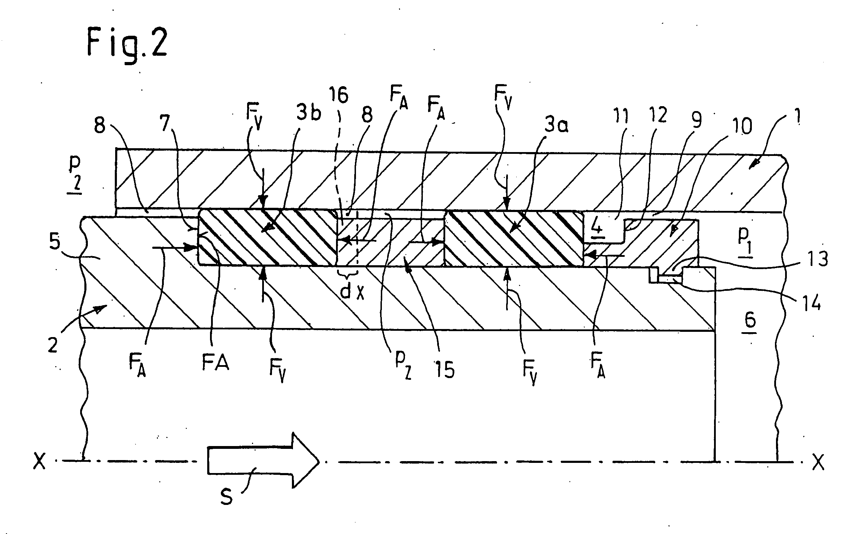

Die in Fig. 2 dargestellte zweite Ausführung eines erfindungsgemäßen Verbindungssystems unterscheidet sich von der ersten Ausführung dadurch, dass im Aufnahmeraum 4 zwei Umfangsdichtungen 3a, 3b axial hintereinander angeordnet und durch einen dazwischen angeordneten, axial verschieblichen Abstandsring 15 - als einem neben dem Ringelement 10 vorgesehenem weiteren ringförmigen Teil der Ringanordnung - voneinander getrennt sind. Im Bereich dieses Abstandsringes 15 herrscht ein mit dem Bezugszeichen $p_Z$ bezeichneter Zwischendruck, der größer als der Vergleichsdruck $p_2$, jedoch kleiner als der erhöhte Druck $p_1$ im fluidführenden System ist. Bei Einsatz gleich großer Umfangsdichtungen 3a, 3b verdoppelt sich die effektive Kontaktlänge KL.

Die erste Umfangsdichtung 3a ist somit zwischen dem Ringelement 10, an welchem - der Umfangsdichtung 3a zugewandt - das erste Kompensationsvolumen 11 ausgebildet ist, und dem Abstandsring 15 gekammert, während die zweite Umfangsdichtung 3b zwischen dem Abstandsring 15 und der Ringstufe 7 des zweiten Kupplungsteiles 2 gekammert ist.

Durch seine freie Verschieblichkeit um einen Betrag, der in Fig. 2 mit dem Bezugszeichen dx bezeichnet ist, entlang der Achse X-X ist der Abstandsring 15 in der Lage, als Teilvolumen des Aufnahmeraums 4 ein Kompensationsvolumen, welches im Weiteren als zweites Kompensationsvolumen 16 bezeichnet wird, für die reversible oder irreversible Zunahme der axialen Länge L der Umfangsdichtungen 3a, 3b, insbesondere der Länge L der zweiten Umfangsdichtung 3b, freizugeben. Der Abstandsring 15 verschiebt bei seiner eigenen axialen Bewegung zur Freigabe des zweiten Kompensationsvolumens 16 auch die erste Umfangsrichtung 3a, und zwar in axialer Richtung X-X auf die Öffnung 9 des Aufnahmeraumes 4 hin, in der das Ringelement 10 angeordnet ist. Diese Bewegung der ersten Umfangsdichtung 3a wird dabei in eine Deformation der ersten Umfangsdichtung 3a in das erste Kompensationsvolumen 11 hinein, welches am Ringelement 10 ausgebildet ist, umgesetzt. Auf diese Weise wird mit Vorteil die Längenzunahme beider Umfangsdichtungen 3a, 3b gleichzeitig ausgeglichen.

Im reversiblen Fall einer Längenabnahme insbesondere der zweiten Umfangsdichtung 3b wirkt die erste Umfangsdichtung 3a aufgrund der ihr immanenten Form- bzw. Eigenelastizität und der axialen Vorpresskraft $F_A$ rückstellend auf den Abstandsring 15, so dass das zweite Kompensationsvolumen 16 wieder verschlossen wird. Mediendichtheit und Funktionssicherheit sind dabei unbeeinträchtigt gewährleistet, da sich bei diesen Vorgängen weder die Kontaktlänge KL, noch die permeationsbestimmende Teilumfangsfläche $A_E$, noch die radiale Verpressung V in nachteiliger Weise ändern. Statt dessen kommt es bei einer Längenzunahme im Gegenteil zu einer vorteilhaften Vergrößerung der Kontaktlänge KL der Umfangsdichtungen 3a, 3b, wobei sich auch jeweils die radiale und axiale Vorpresskraft $F_V$, $F_A$ nicht nennenswert ändern.

In der dritten Ausführung des erfindungsgemäßen Verbindungssystems, die durch Fig. 3 und 4 veranschaulicht wird, sind im Aufnahmeraum 4 ebenfalls zwei Umfangsdichtungen 3a, 3b axial hintereinander angeordnet und durch einen dazwischen angeordneten, axial (X-X) verschieblichen Abstandsring 15 voneinander getrennt. Hierbei ist vorgesehen, dass nicht am Ringelement 10 in der Öffnung 9 ein (erstes) Kompensationsvolumen vorgesehen ist, sondern dass am Abstandsring 15 als Teilvolumen des Aufnahmeraums 4 ein drittes Kompensationsvolumen 17 für die reversible oder irreversible Zunahme der axialen Länge L der Umfangsdichtung 3a, 3b ausgebildet ist. Die Umfangsdichtungen sind wie im zweiten Ausführungsbeispiel der Erfindung gekammert.

Durch seine freie Verschieblichkeit um einen Betrag, der in Fig. 3 wiederum mit dem Bezugszeichen dx bezeichnet ist, entlang der Achse X-X, ist der Abstandsring 15 zunächst in der Lage, als Teilvolumen des Aufnahmeraums 4 das vorstehende beschiriebene zweite Kompensationsvolumen 16 für die reversible oder irreversible Zunahme der axialen Länge L der Umfangsdichtungen 3a, 3b, diesmal jedoch insbesondere der Länge L der ersten Umfangsdichtung 3a, freizugeben.

Der Abstandsring 15 deformiert bei seiner Verschiebung zur Freigabe des zweiten Kompensationsvolumens 16 die zweite Umfangsrichtung 3b in axialer Richtung X-X, und zwar derart, dass die zweite Umfangsdichtung 3b in das dritte Kompensationsvolumen 17 hinein gedrängt wird, welches am Abstandsring 15 ausgebildet ist. Das dritte Kompensationsvolumen 17 ist dabei durch einen von einer Ringstufe 18 des Abstandsringes 15 begrenzten, neben der zweiten Umfangsdichtung 3b liegenden Ringraum im Aufnahmeraum 4 gebildet. Auf diese Weise wird auch hier mit Vorteil die Längenzunahme beider Umfangsdichtungen 3a, 3b gleichzeitig ausgeglichen.

Im gegenteiligen Falle einer Längenabnahme, insbesondere der ersten Umfangsdichtung 3a, wirkt die zweite Umfangsdichtung 3b aufgrund der ihr immanenten Elastizität unter der Wirkung der Verpressung rückstellend auf den Abstandsring 15, so dass mit einer Rückverschiebung in Richtung auf das Ringelement 10 hin das zweite Kompensationsvolumen 16 wieder verschlossen wird, wobei sich die zweite Umfangsdichtung 3b aus dem dritten Kompensationsvolumen zurückziehen kann. Auch hier bleiben Mediendichtheit und Funktionssicherheit - wie bei der zweiten Ausführung der Erfindung beschrieben - unbeeinträchtigt. In der vergrößerten Darstellung gemäß Fig. 4 sind dabei durch die Pfeile P die Permeationswege des Fluids veranschaulicht, wobei deutlich wird, dass die vorstehend erwähnte Teilumfangsfläche $A_E$ bzw. die dort vorliegende Bogenlänge BL permeationsbestimmend ist.

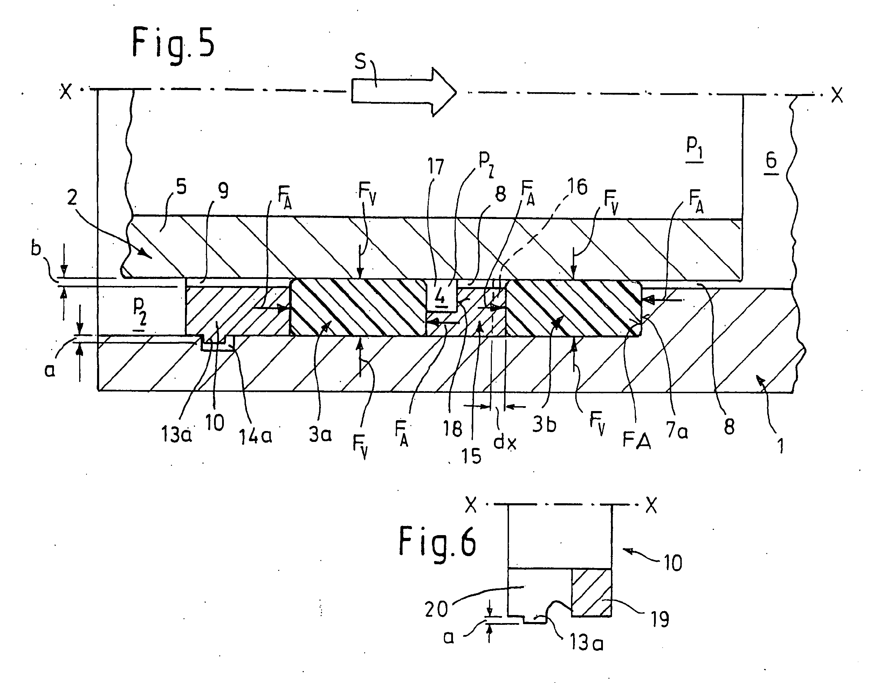

Die in Fig. 5 dargestellte vierte Ausführung eines erfindungsgemäßen Verbindungssystems gleicht vom Aufbau und der Wirkungsweise her der dritten Ausführung der Erfindung, wobei jedoch der Unterschied darin besteht, dass der Aufnahmeraum 4 nicht im zweiten Kupplungsteil 2, also dem Stecker, sondern im ersten Kupplungsteil 1, dem Gehäuse, ausgebildet ist. Die entsprechende Ringstufe ist dabei mit dem Bezugszeichen 7a bezeichnet.

Für diese Ausführung kann bevorzugt ein Ringelement 10 zum Einsatz kommen, wie es in Fig. 6 dargestellt ist. Dieses Ringelement 10 kann mit dem den Aufnahmeraum 4 ausbildenden Kupplungsteil 1 - wie auch bei den vorstehenden Ausführungen beschrieben - wiederum bevorzugt verrasten, wozu es ein geeignetes Rastelement 13a, wie eine Rastnase, und das Kupplungsteil 1 ein komplementäres Rastelement 14a, wie eine Rastnut, aufweisen kann. Im Gegensatz zu den vorhergehenden Ausführungen liegt das Rastelement 13a hier aber radial außen am Ringelement 10 und das komplementäre Rastelement 14a radial innen am Kupplungsteil 1.

Das Ringelement 10, welches aus Kunststoff bestehen kann, kann dabei mit Vorteil derart ausgeführt sein, dass es aus zwei axial hintereinander liegenden Abschnitten 19, 20 besteht, wobei einer der beiden Abschnitte 20, an dem sich das Rastelement 13a befindet, als segmentierter radial federnder Bereich und der andere, zur Anlage an der Umfangsdichtung 3a bestimmte Abschnitt 19 als massiver geschlossener Bereich gestaltet ist.

Außerdem sollte das Ringelement 10 - siehe dazu Fig. 5 - derart bemessen sein, dass es sich, wenn das zweite Kupplungsteil 2 in das erste Kupplungsteil 1 eingesteckt ist, nicht spontan oder unter der Wirkung der Betriebs- und Umgebungsbedingungen lösen kann. Hierzu sollte das Rastelement 13a eine Höhe a aufweisen, die größer ist als eine Spaltweite b zwischen dem Innendurchmesser des Ringelementes 10 und dem Außendurchmesser des zweiten Kupplungsteiles 2.

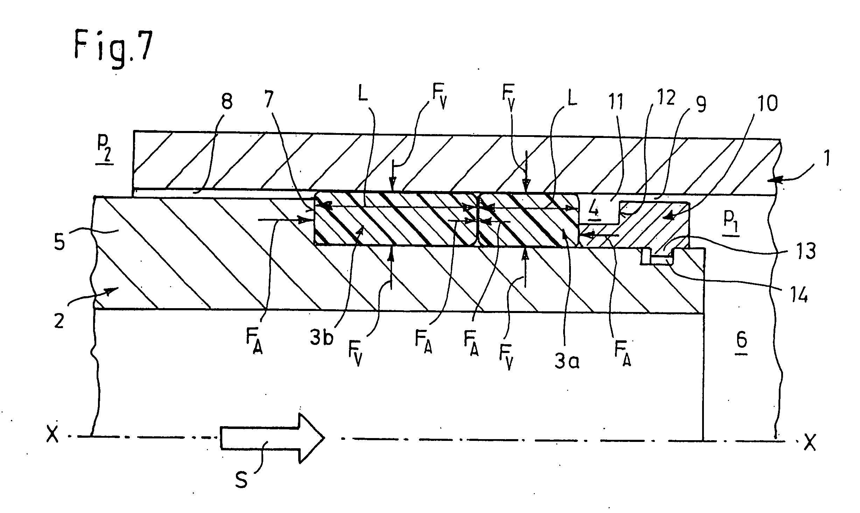

Die in Fig. 7 gezeigte fünfte Ausführung eines erfindungsgemäßen Verbindungssystems ist ähnlich ausgebildet wie die erste Ausführung, wobei sie jedoch zwei Umfangsdichtungen 3a, 3b aufweist, die allerdings nicht wie in der zweiten bis vierten Ausführung der Erfindung durch einen Abstandsring 15 voneinander getrennt sind. Der Aufbau des Systems ist somit einfacher. Wie insbesondere durch die unterschiedlichen Längen L der beiden Umfangsdichtungen 3a, 3b angedeutet ist, können die Umfangsdichtungen 3a, 3b eine unterschiedliche Geometrie aufweisen, aus unterschiedlichen Materialien bestehen und/oder unterschiedliche technische Parameter, wie beispielsweise Shore-Härte, Permeationsverhalten usw., aufweisen. Dadurch kann eine differenziertere Anpassung an die Bedingungen der Abdichtung (Fluidart, Druck, Temperatur usw.) erfolgen. Das Kompensationsvolumen 11 ist in dieser Ausführung ausgebildet wie in der Fig. 1 dargestellten.

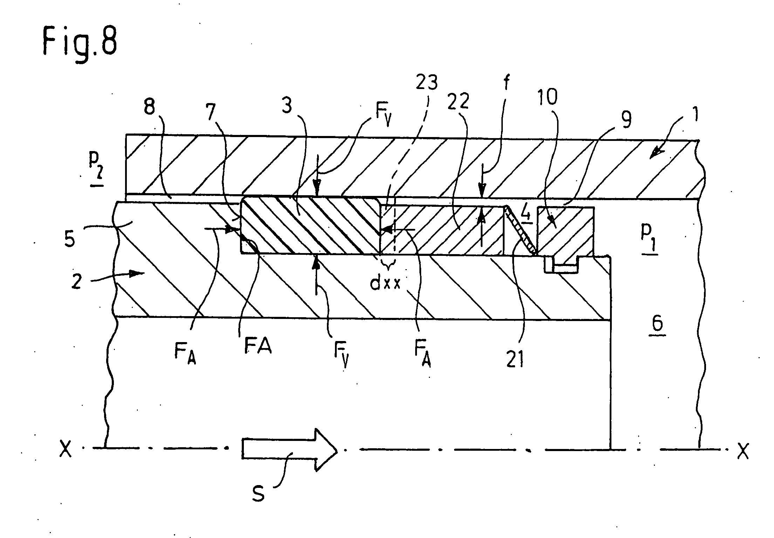

Fig. 8 zeigt ein erfindungsgemäßes Verbindungssystem in einer sechsten Ausführung, wobei diese Ausführung mit einer Umfangsdichtung 3 - wie auch die weiteren in Fig. 9 bis 11 dargestellten Ausführungsbeispiele mit zwei Umfangsdichtungen 3a, 3b - die oben erwähnte zweite grundlegende bevorzugte Ausführungsform der Erfindung repräsentieren. Hierbei ist vorgesehen, dass zwischen dem Ringelement 10 und der Umfangsdichtung 3 ein gegen ein elastisches Federelement 21, das die axiale Vorpresskraft $F_A$ erzeugt, um einen Betrag dxx axial verschieblicher Kompensationsring 22 als weiteres ringförmiges Teil der Ringanordnung angeordnet ist, der als Teilvolumen des Aufnahmeraums 4 ein viertes Kompensationsvolumen 23 für die reversible oder irreversible Zunahme der axialen Länge L der Umfangsdichtung 3 freigibt.

Im gegenteiligen Falle einer Längenabnahme der Umfangsdichtung 3 wirkt diese aufgrund ihrer Elastizität unter der Wirkung der Verpressung gegen die Kraft des Federelementes 21 rückstellend auf den Kompensationsring 22, so dass mit einer Rückverschiebung in Richtung auf das Ringelement 10 hin das vierte Kompensationsvolumen 23 - teilweise oder ganz - wieder verschlossen wird.

Die in Fig. 9 dargestellte siebente Ausführung des erfindungsgemäßen Verbindungssystems gleicht, was das Vorhandensein von zwei Umfangsdichtungen 3a, 3b und das Vorhandensein des Abstandsringes 15 betrifft, durch dessen Axialverschiebung dx ein Kompensationsvolumen der Art entsteht, wie es vorstehend als zweites Kompensationsvolumen 16 bezeichnet wurde, der zweiten Ausführung der Erfindung. Im Hinblick auf das Vorhandensein des Kompensationsringes 22, der durch seine Verschiebung dxx das vierte Kompensationsvolumen 23 freigibt, gleicht diese Ausführung der sechsten Ausführung der Erfindung. Entsprechend ist auch ihre Wirkungsweise.

Ähnlich wie in Fig. 4 für die dritte Ausführung der Erfindung sind in Fig. 10 für die siebente Ausführung der Erfindung durch die Pfeile P die Permeationswege des Fluids veranschaulicht, wobei deutlich wird, dass die vorstehend erwähnte Teilumfangsfläche $A_E$ bzw. die dort vorliegende Bogenlänge BL permeationsbestimmend ist.

Dabei wird des Weiteren aber durch den Vergleich von Fig. 10 mit Fig. 4 auch deutlich, dass die Ausführungen, in denen als Ringelement 10 bzw. als weitere ringförmige Teile der Ringanordnung ein Abstandsring 15 und/oder ein Kompensationsring 22 Anwendung finden, die keine Kompensationsvolumina aufweisen, wie sie vorstehend als erstes Kompensationsvolumen 11 oder als drittes Kompensationsvolumen 17 bezeichnet wurden und bei denen durch eine Ringstufe 12, 18 ein Ringraum im Aufnahmeraums 4 gebildet bzw. begrenzt ist, im Hinblick auf die Permeation als besonders begünstigt anzusehen sind. Diese Teile 10, 15, 22 können dann - wie dargestellt - derart massiv ausgeführt werden, dass sie den Querschnitt des Aufnahmeraums 4 über ihre jeweilige Gesamtlänge nahezu vollständig ausfüllen, wobei eine jeweils verbleibende Spaltweite zwischen den ringförmigen Teilen 10, 15, 22 und den Kupplungsteilen 1, 2 sehr klein, d.h. in derselben Größe oder kleiner als die Spaltweite s des abzudichtenden Spaltes 8, ist. In Fig. 10 ist dabei exemplarisch eine solche geringe Spaltweite zwischen dem ersten Gehäuseteil 1 und dem Abstandsring 15 mit dem Bezugszeichen c und zwischen dem zweiten Gehäuseteil 2 und dem Abstandsring 15 mit dem Bezugszeichen d bezeichnet. In Fig. 3 ist eine solche geringe Spaltweite zwischen dem ersten Gehäuseteil 1 und dem Ringelement 10 mit dem Bezugszeichen e bezeichnet. Des Weiteren hat in Fig. 7 eine entsprechende geringe Spaltweite zwischen dem ersten Gehäuseteil 1 und dem Kompensationsring 22 das Bezugszeichen f. Nicht nur die permeationsbestimmende Teilumfangsfläche $A_E$, an der der Fluidaustritt erfolgt, sondern auch die Fluideintrittsflächen (mit A1, A2 exemplarisch in Fig. 10 bezeichnet) der Umfangsdichtungen 3, 3a, 3b sind damit optimal klein.

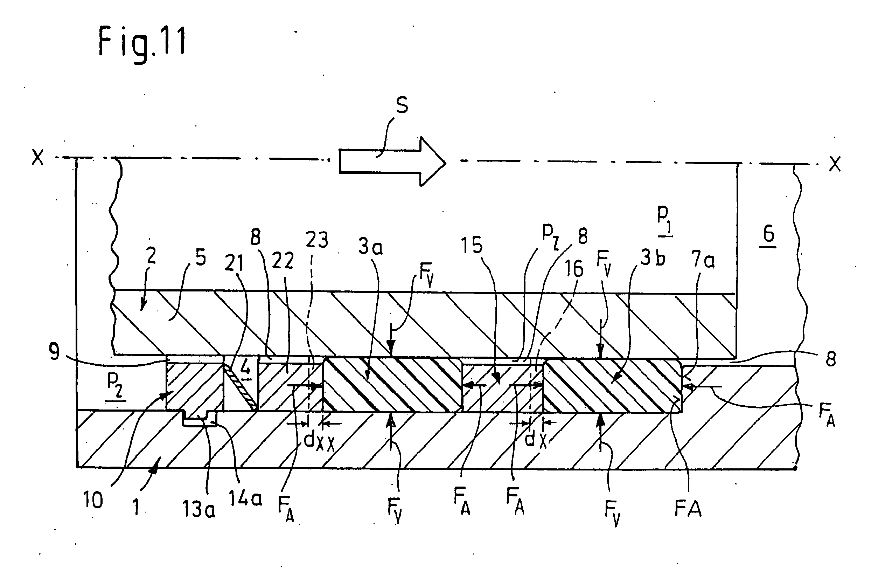

Die in Fig. 11 dargestellte achte Ausführung unterscheidet sich von der siebenten Ausführung des erfindungsgemäßen Verbindungssystems dadurch, dass - wie bei der in Fig. 5 dargestellten vierten Ausführung - der Aufnahmeraum 4 nicht im zweiten Kupplungsteil 2, also dem Stecker, sondern im ersten Kupplungsteil 1, dem Gehäuse, ausgebildet ist.

Die Fig. 12 bis 14 dienen zur Veranschaulichung des Ablaufs der vorteilhaft einfachen Montage eines erfindungsgemäßen Verbindungssystems, insbesondere beispielhaft in einer Ausführung, wie sie in Fig. 3 dargestellt ist.

Zunächst werden dazu in einem ersten Montageschritt entgegen der Steckrichtung S nacheinander die zweite Umfangsdichtung 3b, der Abstandsring 15, die erste Umfangsdichtung 3a und das Ringelement 10 auf den Schaft 5 des zweiten Kupplungsteils 2 aufgeschoben.

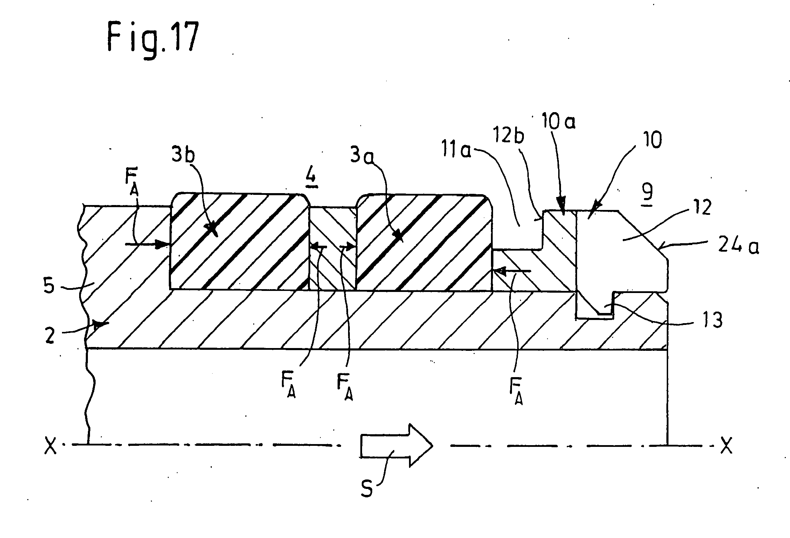

Das Ringelement 10 wird mit dem zweiten Kupplungsteil 2 kraft- und/oder formschlüssig lösbar verbunden, insbesondere verrastet. Danach wird der so bestückte Schaft 5 - wie Fig. 12 zeigt - in Steckrichtung S in die Aufnahmeöffnung 6 des ersten Kupplungsteils 1 eingeführt. Zur Erleichterung des Einführens kann das erste Kupplungsteil 1 an seinem Innenumfang eine Einführschräge 24 aufweisen. Auch das Ringelement 10 kann - wie aus Fig. 17 ersichtlich - eine Einführschräge 24a aufweisen.

Beim weiteren Hineinstecken des Schaftes 5 erfolgt dann - wie Fig. 13 zeigt - zunächst unter Deformation der ersten Umfangsdichtung 3a die Erzeugung einer radialen Vorpresskraft $F_V$ und gegebenenfalls auch einer axialen Vorpresskraft $F_A$. Die erste Umfangsdichtung 3a befindet sich dabei bereits im Aufnahmeraum 4 und füllt den axialen Raum zwischen dem Abstandsring 15 und dem Ringelement 10 aus.

Schließlich führt ein Weiterstecken des Schaftes 5 dazu, dass auch die zweite Umfangsdichtung 3b in den Aufnahmeraum 4 gelangt, wo sie unter Erzeugung einer radialen Vorpresskraft $F_V$ und gegebenenfalls auch Erzeugung bzw. Verstärkung der axialen Vorpresskaft $F_A$ deformiert wird. Gleichzeitig wird - wie oben unter Bezugnahme auf Fig. 1 für das Kompensationsvolumen 11 am Ringelement 10 erläutert - schon bevor sich der Betriebszustand einstellt, bereits ein Volumenanteil der Umfangsdichtung 3b in dem dritten Kompensationsvolumen 17 des Abstandsrings 15 aufgenommen. Abschließend können die beiden Kupplungsteile 1, 2 auf geeignete, an sich bekannte Weise, beispielsweise durch Verschraubung mit einer Überwurfmutter, gegen eine axiale Relativbewegung gegeneinander gesichert werden. Auch eine Verbindung durch Verrasten ist möglich.

Fig. 15 und 16 stellen als Alternative zu Fig. 6, die sich auf die Ausbildung des Aufnahmeraums 4 im ersten Kupplungsteil 1 bezieht, als Einzelteil eine Ausführung des erfindungsgemäß vorgesehenen Ringelementes 10 dar, wie es bevorzugt in den Ausführungen zur Anwendung kommen kann, wenn der Aufnahmeraum 4 im zweiten Kupplungsteil 2 ausgebildet ist. Hinsichtlich der konstruktiven Einzelheiten wird hierbei auf die obigen Erläuterungen zu Fig. 1 Bezug genommen.

In Fig. 17, die sich auf ein erfindungsgemäßes Verbindungssystem in einer neunten Ausführung bezieht, ist das Ringelement 10 anders als in Fig. 15 und 16 bzw. als in Fig. 1, 2, 3 usw. ausgebildet. Das Ringelement 10 erfüllt hier nur eine reine Haltefunktion und weist zu diesem Zweck das Rastelement 13 auf, wobei es im Sinne einer einfachen Montage geschlitzt ist (Schlitz 12). Das Ringelement 10 weist jedoch kein Kompensationsvolumen auf. Statt dessen ist als weiterer Bestandteil der Ringanordnung ein zusätzlicher Ring vorgesehen, der hier als Stirnring 10a bezeichnet wird. Dieser Stirnring 10a ist ungeschlitzt und liegt zwischen einer ersten Umfangsdichtung 3a und dem Ringelement 10. Der Stirnring 10a weist auf der Seite der Umfangsdichtung 3a ein fünftes Kompensationsvolumen 11a auf, das nach der gleichen Art ausgebildet ist, wie das erste Kompensationsvolumen 11. Die entsprechende Ringstufe ist mit dem Bezugszeichen 12b bezeichnet. Anderseitig liegt der Stirnring 10a mit einer nicht näher bezeichneten Ringfläche an einer korrespondierenden Ringfläche des Ringelementes 10 an. Der Stirnring 10a kann zur Montage in einfacher Weise auf den Schaft 5 des zweiten Kupplungsteils 2 geschoben werden, wobei durch die Paarung geschlitztes Ringelement 10 / ungeschlitzter Stirnring 10a die konstruktiv etwas komplexere Ausführung des Ringelementes, wie sie in Fig. 15 und 16 dargestellt ist, vereinfacht wird. Außerdem wird auf diese Weise die oben erwähnte Forderung erfüllt, dass die anliegende Umfangsdichtung 3a nicht mit dem Spalt 12 im Ringelement 10 in Berührung kommen bzw. darin eingeklemmt oder davon beschädigt werden soll. Im Übrigen besitzt die neunte Ausführung einen konstruktiven Aufbau wie die zweite Ausführung des erfindungsgemäßen Verbindungssystems.

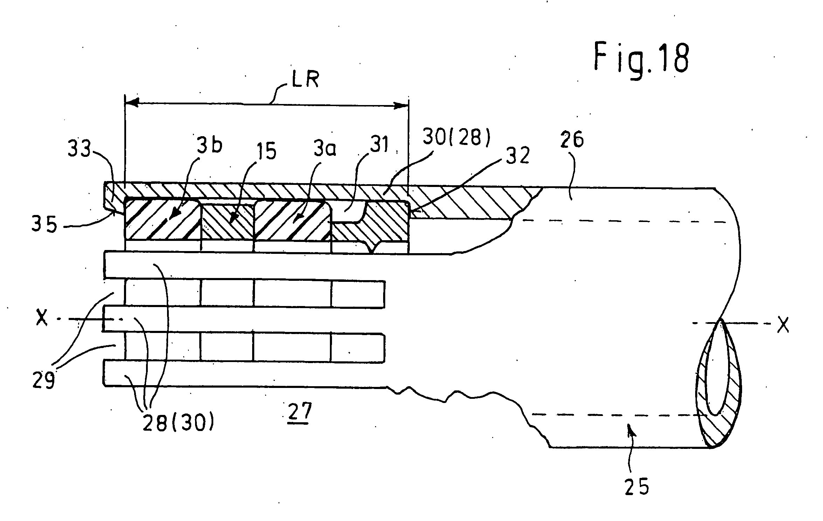

Fig. 18 zeigt eine Montagevorrichtung 25, die mit Vorteil bei der Montage eines erfindungsgemäßen Verbindungssystems einsetzbar ist. Hinsichtlich des Verbindungssystems bezieht sich die Darstellung insbesondere exemplarisch auf eine Ausführung, wie sie in Fig. 2 dargestellt ist. Die Montagevorrichtung 25, die auch als ein mit denen im Aufnahmeraum 4 zu positionierenden Bauteilen 3b, 15, 3a, 10 vorkonfektioniertes Werkzeug betrachtet werden kann, kann eingesetzt werden, um den unter Bezugnahme auf Fig. 12 erläuterten ersten Montageschritt, der das sukzessive Aufschieben der zweiten Umfangsdichtung 3b, des Abstandsrings 15, der ersten Umfangsdichtung 3a und des Ringelementes 10 auf den Schaft 5 des zweiten Kupplungsteils 2 als mehrere Teilschritte vorsieht, am Einsatzort, wie bei einem Kraftfahrzeughersteller bei der Herstellung des Kühlkreislaufs eines Fahrzeugs, tatsächlich nur in einem Montageschritt durchzuführen.

Die Montagevorrichtung 25 besteht aus einem Rohrstück 26, welches mehrere, seinen Innenraum 27 umgebende, kreisförmig angeordnete, sich in axialer Richtung X-X erstreckende, radial elastisch deformierbare Finger 28 aufweist. Die Finger 28 sind durch das Einbringen von Schlitzen 29 in eine Rohrwandung 30 des Rohrstücks 26 gebildet. Durch die Finger 28 ist an der - zumindest in ihrem Mündungsbereich - radial elastisch aufweitbaren Rohrwand auf diese Weise ein wandnaher Ringraum 31 gebildet, der im Innenraum 27 des Rohrstücks 26 auf der dem freien Ende der Finger 28 gegenüberliegenden Seite durch eine für die zu montierenden Bauteile 3b, 15, 3a, 10, insbesondere unmittelbar für das Ringelement 10, als Anschlag wirkende Ringstufe 32 begrenzt ist. Die axiale Länge LR des Ringraums 31 wird dabei durch die Summe der axialen Längen des Ringelements 10, der beiden unverpressten Umfangsdichtungen 3a, 3b und des Abstandsringes 15 bestimmt. Dabei kann vorteilhafterweise - wie dargestellt - an der Mündung des Rohrstücks 26, wo sich die freien Enden der Finger 28 befinden, ein von der Rohrwandung 30 nach innen abstehender Halteansatz 33 des jeweiligen Fingers 28 vorhanden sein, der dazu bestimmt ist, die zu montierenden Bauteile 10, 3a, 3b, 15 im Ringraum 31 festzuhalten.

Zur Vormontage werden die Bauteile 10, 3a, 3b, 15 in umgekehrter Reihenfolge, wie unter Bezug auf Fig. 12 ausgeführt wurde, auf in den Innenraum 27 eingeschoben und dabei in den Ringraum 31 an den Fingern 28 eingebracht, wobei sie zwischen der Ringstufe 32 und dem Halteansatz 33 der Montagevorrichtung 25 fixiert werden, wie dies in Fig. 18 dargestellt ist. Die auf diese Weise vorkonfektionierte Einheit ist lager- und transportfähig.

Zur Durchführung des vorstehend bereits erläuterten ersten Montageschrittes werden diese vorkonfektionierte Einheit und das zweite Kupplungsteil 2 in axialer Richtung X-X ineinander geschoben. Die Rohrwandung 30 der Montagevorrichtung 25 umgreift das Kupplungsteil 2 dabei außenseitig, und die Finger 28 übertragen, indem sie durch das Einschieben in den Innenraum 34 des zweiten Kupplungsteils 2 radial nach außen deformiert werden, die zweite Umfangsdichtung 3b, den Abstandsring 15, die erste Umfangsdichtung 3a und das Ringelement 10 in den Aufnahmeraum 4 auf den Schaft 5 des zweiten Kupplungsteils 2.

Zur Erleichterung des Ineinanderschiebens kann an der Rohrmündung der Montagevorrichtung 25 - wie dargestellt - eine Einführschräge 35 vorgesehen sein, die, wenn sie in Kontakt mit der Ringstufe 7 des zweiten Kupplungsteiles 2 kommt, die mündungsseitige Aufweitung der Rohrwandung 30 bzw. der Finger 28 begünstigen kann, so dass die Bauteile, insbesondere die zweite Umfangsdichtung 3b, durch den Halteansatz 33 freigegeben werden.

Nachdem das Ringelement 10 mit dem zweiten Kupplungsteil 2 verrastet ist, kann die Montagevorrichtung 25 von dem Kupplungsteil 2 durch ein Zurückziehen entfernt werden. Die Rastkraft, die das Ringelement 10 am Schaft 5 festhält, ist dabei größer als die Haltekraft, die durch den Halteansatz 33 auf die Bauteile ausgeübt wird, so dass die Bauteile 3b, 15, 3a, 10 auf dem Schaft 5 verbleiben.

Durch die Montagevorrichtung 25 wird die Montagesicherheit erhöht, weil das sukzessive Aufschieben nicht direkt an der Montagestelle erfolgen muss und daher die Gefahr eines Vertauschens der Reihenfolge der zu montierenden Bauteile 3b, 15, 3a, 10 sinkt. Außerdem werden die Bauteile 3b, 15, 3a, 10 auch vor Beschädigungen beim Transport oder bei der Montage besser geschützt. Das von den Bauteilen 3b, 15, 3a, 10 befreite Rohrstück 26 kann zurückgeführt und von neuem als vorkonfektionierte Einheit ausgerüstet werden.

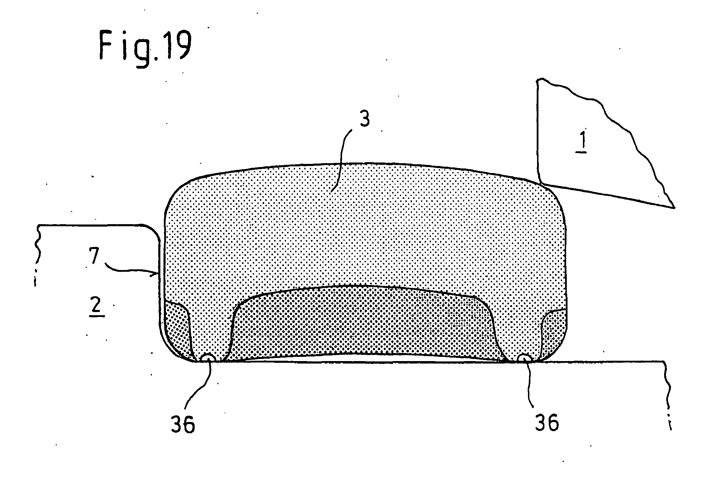

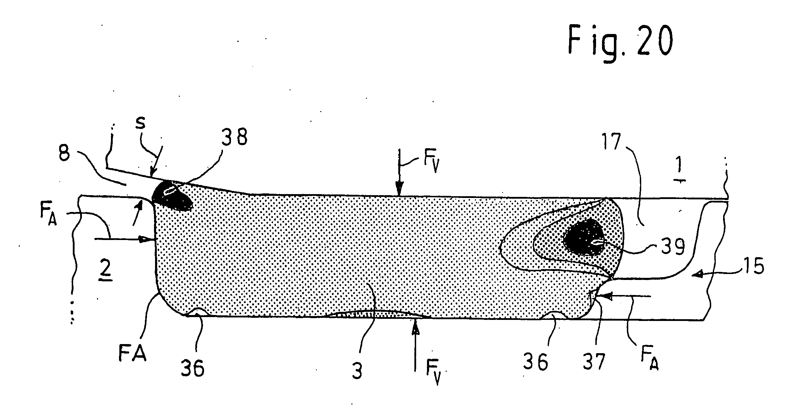

Durch die Schnittdarstellungen in Fig. 19 und 20, die Querschnitte von in einem erfindungsgemäßen Verbindungssystem einsetzbaren Umfangsdichtungen 3 zeigen, werden einerseits die in der Umfangsdichtung 3, 3a, 3b auftretenden mechanischen Spannungen veranschaulicht, wobei hellere Stellen Bereiche höherer mechanischer Spannung und dunklere Stellen Bereiche geringerer mechanischer Spannung markieren. So zeigt eine unverpresste Umfangsdichtung 3, wie sie in Fig. 19 dargestellt ist, eine symmetrische Spannungsverteilung und nur an ihren radialen Auflagestellen 36 einen Spitzenwert der mechanischen Spannungen, der durch eine radiale Aufweitung der Umfangsdichtung 3 bestimmt ist.

Fig. 20, die eine Umfangsdichtung 3 in einer Einbausituation zeigt, wie sie beispielsweise für die zweite Umfangsdichtung 3b in Fig. 14 vorliegt, verdeutlicht, dass im Montagezustand keine symmetrische Spannungsverteilung mehr vorliegt. Die in der Zeichnung unten liegenden hellen Stellen 36 weisen dabei auf die radiale Verpressung und radiale Vorpresskraft $F_V$ hin, während die helle Stelle 37 im Bereich des Abstandsringes 15 eine axiale Verpressung und axiale Vorpresskraft $F_A$ anzeigt. Die dunklen Stellen 38, 39 im Bereich des abzudichtenden Spaltes 8 und im Bereich des Kompensationsvolumens 17 veranschaulichen einen mechanischen Spannungsabbau, der an diesen Stellen vor sich gegangen ist.

Die Erfindung ist nicht auf die dargestellten Ausführungsbeispiele beschränkt. Sie umfasst auch alle im Rahmen der Ansprüche liegenden Ausführungen, die bei montagefreundlicher konstruktiver Gestaltung unter Einsatz der beschriebenen Ringanordnung für die Umfangsdichtung(en) 3, 3a, 3b - sogar bei Vorliegen einer axialen Vorpresskraft $F_A$ - dennoch eine axiale Beweglichkeit bzw. Längenänderung ermöglichen. So ist es z. B. möglich, dass die vorstehend mit erstes, zweites, drittes, viertes und fünftes Kompensationsvolumen 11, 16, 17, 23, 11a bezeichneten Teilvolumina des Aufnahmeraums 4 in verschiedenen - auch in nicht dargestellten - Kombinationen auftreten können.

Des Weiteren kann der Fachmann vorteilhafte technische Ausgestaltungsformen vorsehen, ohne dass der Rahmen der Erfindung verlassen wird. So zeigt beispielsweise Fig. 19 eine bevorzugte Dichtungsform, wie sie auch in der eingangs genannten WO-A-2006/051071 detailliert beschrieben ist. Hinsichtlich der Abmessungen und weiterer Merkmale dieser Umfangsdichtung 3 sowie auch der weiteren bevorzugt einsetzbaren Umfangsdichtungen wird in vollem Umfang auf die WO-A-2006/051071 verwiesen.

Was die den Aufnahmeraum 4 begrenzende Ringstufe 7 betrifft, so ist es möglich, dass diese nicht die einzige Stufe bildet, sondern durch eine oder mehrere weitere Stufen ergänzt ist. Dies bietet die Möglichkeit, insbesondere zwei oder auch mehr Umfangsdichtungen, die jeweils unterschiedliche Durchmesser aufweisen anstelle bzw. zusätzlich zu der Umfangsdichtung 3b vorzusehen.

Was eine - wie die in Fig. 2 exemplarisch dargestellte - Ausführung betrifft, bei der im Aufnahmeraum 4 zwei Umfangsdichtungen 3a, 3b axial hintereinander angeordnet und durch einen dazwischen angeordneten Abstandsring 15 voneinander getrennt sind, so ist es auch möglich, die Umfangsdichtungen 3a, 3b und den Abstandsring 15 als ein einziges Bauteil auszuführen, in dem beispielsweise die Umfangsdichtungen 3a, 3b und der Abstandsring 15 stoffschlüssig, z. B. durch ein Anspritzen und/oder Anvulkanisieren der Dichtungen 3a, 3b an den Abstandsring 15, miteinander verbunden sind.

Was die Montagevorrichtung betrifft, so kann diese in Umkehrung der vorstehend beschriebenen Verhältnisse konstruktiv auch derart gestaltet werden, dass eine Montage der in Fig. 5 und 11 dargestellten Ausführungen des erfindungsgemäßen Verbindungssystems möglich ist.

Neben dem bevorzugten Einsatz in Kohlendioxid führenden Fluidsystemen kann auch mit Vorteil eine weitere bevorzugte Anwendung der Erfindung erfolgen, wenn es sich bei den im System strömenden Medien um hoch flüchtige Fluide, wie beispielsweise um Wasserstoff, handelt. Hierbei tritt zwar teilweise die Problematik der explosiven Dekompression in den Hintergrund, die Anforderungen an Permeationsdichtheit sind jedoch ähnlich oder gleich. Die Anordnung der Umfangsdichtungen in der/den Nut(en), die optimierte Spaltabdeckung, die starke Kompression der Umfangsdichtungen und die große Permeationslänge wirken sich auch in einem solchen System, wie beispielsweise bei einer Anwendung als Verbindungssystem in einer Wasserstoff-Brennstoffzelle, äußerst vorteilhaft aus.

**Bezugszeichen**

| | |
|---|---|
| 1 | erstes Kupplungsteil (Gehäuseteil) |
| 2 | zweites Kupplungsteil (Steckerteil) |
| 3 | Umfangsdichtung (Fig. 1, 7) |
| 3a | erste Umfangsdichtung (Fig. 2, 3, 5, 9, 11-14, 17) |
| 3b | zweite Umfangsdichtung (Fig. 2-5, 9-14, 17) |
| 4 | Aufnahmeraum für 3 in 1 oder 2 |
| 5 | Schaft von 2 |
| 6 | Aufnahmeöffnung von 1 |
| 7 | Ringstufe von 2 |
| 7a | Ringstufe von 1 |
| 8 | Spalt zwischen 1 und 2 |
| 9 | Öffnung in 4, anderendig gegenüber 7, 7a |
| 10 | ringförmiges Teil, Ringelement |
| 10a | ringförmiges Teil, Stirnring (Fig. 17) |
| 11 | erstes Kompensationsvolumen (an 10) |
| 11a | fünftes Kompensationsvolumen (an 10a) |
| 12 | Ringstufe von 10 zur Ausbildung von 11 |
| 12a | Spalt in 10 |
| 12b | Ringstufe von 10a zur Ausbildung von 11a |
| 13 | Rastelement an 10 für 1 |
| 13a | Rastelement an 10 für 2 |
| 14 | komplementäres Rastelement zu 13 in 1 |
| 14a | komplementäres Rastelement zu 13a in 2 |
| 15 | ringförmiges Teil, Abstandsring zwischen 3a, 3b |
| 16 | zweites Kompensationsvolumen |
| 17 | drittes Kompensationsvolumen |
| 18 | Ringstufe von 15 zur Ausbildung von 17 |
| 19 | Abschnitt von 10 (massiv) |
| 20 | Abschnitt von 10 (segmentiert), mit 13a |
| 21 | Federelement |
| 22 | ringförmiges Teil, Kompensationsring |
| 23 | viertes Kompensationsvolumen |
| 24 | Einführschräge an 1 für 2 |
| 24a | Einführschräge an 10 |
| 25 | Montagevorrichtung |

26 Rohrstück von 25
27 Innenraum von 26
28 Finger in 27
29 Schlitz zwischen 28
30 Rohrwandung von 26
31 Ringraum in 27
32 Ringstufe in 27
33 Halteansatz an 30
34 Innenraum von 2 (Fig. 12)
35 Einführschräge an 25 für 2
36 Auflagestelle von 3 auf 2
37 Anlagestelle von 3 an 15
38 Bereich von 3 in 8
39 Bereich von 3 in 17

A1 Fluideintrittsfläche von 3, 3a, 3b
A2 Fluideintrittsfläche von 3, 3a, 3b
$A_E$ permeationsbestimmende Teilumfangsfläche von $A_V$
$A_R$ radialer Querschnitt von 3, 3a, 3b, deformiert
$A_V$ Querschnitt von 3, 3a, 3b, deformiert, senkrecht zur axialen Richtung
$A_U$ radialer Querschnitt von 3, 3a, 3b, unverpresst
a Höhe von 13a
b Spaltweite zwischen 10 und 2
c Spaltweite zwischen 15 und 1
d Spaltweite zwischen 15 und 2
e Spaltweite zwischen 10 und 1
f Spaltweite zwischen 22 und 1
BL Bogenlänge von $A_V$
dx axiale Verschiebung von 15
dxx axiale Verschiebung von 22
$F_A$ axiale Vorpresskraft von 3
$F_V$ radiale Vorpresskraft von 3
FA Anlagefläche von 3 an 7, 7a
K Kontur von 28
K1 Kontur von 29
KL Kontaktlänge von 3, 3a, 3b mit 1/2
L Länge von 3, 3a, 3b
LR axiale Länge von 31
NL Nutlänge von 4 (in Richtung X-X)
P Permeationsweg
$p_1$ hoher Fluiddruck
$p_2$ niedriger Fluiddruck
$p_z$ Zwischendruck
S Steckrichtung von 2 in 1
s Spaltweite von 8
SD Schnurstärke von 3, 3a, 3b (unverpresst)
T Tiefe von 4
X-X Längsachse von 1, 2, 25

**Patentansprüche**

1. Verbindungssystem für fluidführende Systeme, wie Leitungen, Armaturen oder Aggregate, die zur Führung eines mit einem gegenüber einem Vergleichsdruck ($p_2$) erhöhten Druck ($p_1$) beaufschlagten Fluids bestimmt sind, insbesondere für Kohlendioxid führende Systeme, umfassend ein erstes Kupplungsteil (1), wie ein Gehäuseteil, ein entlang einer Achse (X-X) in eine Aufnahmeöffnung (6) des ersten Kupplungsteils (1) mit einem Schaft (5) einsteckbares zweites Kupplungsteil (2), wie ein Steckerteil, und mindestens eine aus einem Elastomer bestehende Umfangsdichtung (3, 3a, 3b), die in einem Aufnahmeraum (4) angeordnet ist, welcher umfangsgemäß in einem der beiden Kupplungsteile (1, 2) ausgebildet ist und in axialer Richtung (X-X) einendig durch eine Ringstufe (7, 7a) des den Aufnahmeraum (4) ausbildenden Kupplungsteiles (1, 2) begrenzt ist, wobei für die Umfangsdichtung (3, 3a, 3b) in dem Aufnahmeraum (4) ein Kompensationsvolumen (11, 11a, 16, 17, 23) für eine reversible oder irreversible Zunahme der axialen Länge (L) der Umfangsdichtung (3) vorhanden ist sowie eine Ringanordnung (10, 10a, 15, 22) vorhanden ist, welche in einer Öffnung (9) des Aufnahmeraumes (4) angeordnet und mit dem den Aufnahmeraum (4) ausbildenden Kupplungsteil (1, 2) kraft- und/oder formschlüssig verbunden ist, **dadurch gekennzeichnet, dass** das Kompensationsvolumen (11, 11a, 16, 17, 23) von der Ringanordnung (10, 10a, 15, 22) bereitgestellt wird, indem ein von einer Ringstufe (12, 12b, 18) eines Ringelements (10, 15) der Ringanordnung (10, 10a, 15, 22) begrenzter Ringraum im Aufnahmeraum (4) ein Teilvolumen des Aufnahmeraums (4) als Kompensationsvolumen bildet, und/oder indem ein axial (X-X) verschieblicher, der Ringanordnung (10, 10a, 15, 22) zugehöriger Abstandsring (15) und/oder ein der Ringanordnung (10, 10a, 15, 22) zugehöriger Kompensationsring (22) bei einer axialen Verschiebung (dx, dxx) gegen eine axiale Vorpresskraft ($F_A$) eines elastischen Federelementes (21) als Kompensationsvolumen ein Teilvolumen (23) des Aufnahmeraums (4) freigibt.

2. Verbindungssystem nach Anspruch 1, **dadurch gekennzeichnet, dass** die Ringanordnung (10, 10a, 15, 22) derart ausgeführt ist, dass sie auf die Umfangsdichtung (3, 3a, 3b), vorzugsweise aufgrund der Wirkung der Elastizität der Umfangsdichtung (3, 3a, 3b) unter radialer Verpressung und/oder durch ein zusätzliches elastisches Federelement (21), zumindest im Montagezustand eine axiale Vorpresskraft ($F_A$) erzeugt.

3. Verbindungssystem nach Ansprüch 1 oder 2, **dadurch gekennzeichnet, dass** die Ringanordnung (10, 10a, 15, 22) zwei oder mehr ringförmige Teile (10, 15, 22) umfasst.

4. Verbindungssystem nach einem der Ansprüche 1 bis 3, **dadurch gekennzeichnet, dass** die Ringanordnung (10,10a, 15, 22) mindestens ein ringförmiges Teil (10, 15, 22) umfasst, welches axialbeweglich im Aufnahmeraum (4) angeordnet ist.

5. Verbindungssystem nach einem der Ansprüche 1 bis 4;
**dadurch gekennzeichnet, dass** das Kompensationsvolumen (11, 11a, 16, 17, 23) an dem Ringelement (10) und/oder an einem weiteren im Aufnahmeraum (4) angeordneten ringförmigen Teil (10a, 15, 22) der Ringanordnung (10, 10a, 15, 22) ausgebildet ist.

6. Verbindungssystem nach Anspruch 4 oder 5,
**dadurch gekennzeichnet, dass** das Kompensationsvolumen (11, 11a, 16, 17, 23) durch eine axiale Verschiebung (dx, dxx) des axialbeweglichen ringförmigen Teils (15, 22) freigegeben wird.

7. Verbindungssystem nach einem der Ansprüche 1 bis 6,
**dadurch gekennzeichnet, dass** im Aufnahmeraum (4) zwei Umfangsdichtungen (3a, 3b) axial hintereinander angeordnet und vorzugsweise durch einen dazwischen angeordneten, axial (X-X) verschieblichen Abstandsring (15) der Ringanordnung (10, 10a, 15, 22) voneinander getrennt sind.

8. Verbindungssystem nach Anspruch 7,
**dadurch gekennzeichnet, dass** der Abstandsring (15) bei seiner axialen Verschiebung (dx) als Teilvolumen des Aufnahmeraums (4) ein zweites Kompensationsvolumen (16) für die reversible oder irreversible Zunahme der axialen Länge (L) der Umfangsdichtungen (3a, 3b) freigibt.

9. Verbindungssystem nach Anspruch 7 oder 8,
**dadurch gekennzeichnet, dass** am Abstandsring (15) als Teilvolumen des Aufnahmeraums (4) ein drittes Kompensationsvolumen (17) für die reversible oder irreversible Zunahme der axialen Länge (L) der Umfangsdichtungen (3a, 3b) ausgebildet ist.

10. Verbindungssystem nach Anspruch 9,
**dadurch gekennzeichnet, dass** das dritte Kompensationsvolumen (17) durch einen von einer Ringstufe (18) des Abstandsringes (15) begrenzten Ringraum im Aufnahmeraum (4) gebildet ist.

11. Verbindungssystem nach einem der Ansprüche 1 bis 10,
**dadurch gekennzeichnet, dass** zwischen dem Ringelement (10) und der Umfangsdichtung (3, 3a, 3b) ein gegen ein elastisches Federelement, (21), welches gegen die Eigenelastizität der Umfangsdichtung (3, 3a, 3b) eine/die axiale Vorpresskraft ($F_A$) erzeugt, axial verschieblicher Kompensationsring (22) der Ringanordnung (10, 10a, 15, 22) angeordnet ist, der bei seiner axialen Verschiebung (dxx) als Teilvolumen des Aufnahmeraums (4) ein viertes Kompensationsvolumen (23) für die reversible oder irreversible Zunahme der axialen Länge (L) der Umfangsdichtung (3, 3a, 3b) freigibt.

12. Verbindungssystem nach einem der Ansprüche 1 bis 11,
**dadurch gekennzeichnet, dass** das Ringelement (10) mit dem den Aufnahmeraum (4) ausbildenden Kupplungsteil (1, 2) verrastet ist, wobei das Ringelement (10) ein Rastelement (13, 13a), wie eine Rastnase, und das Kupplungsteil (1, 2) ein komplementäres Rastelement (14, 14a), wie eine Rastnut, aufweist.

13. Verbindungssystem nach Anspruch 12,
**dadurch gekennzeichnet, dass** das Rastelement (13a) eine Höhe (a) aufweist, die größer ist als eine Spaltweite (b) zwischen dem Ringelement (10) und dem Kupplungsteil (1, 2).

14. Verbindungssystem nach einem der Ansprüche 1 bis 13,
**dadurch gekennzeichnet, dass** das Ringelement (10) in axialer Richtung (X-X) oder schräg dazu geschlitzt ist, wobei die Schlitzung vorzugsweise derart ausgeführt ist, dass das Ringelement (10) im montierten Zustand geschlossen ist.

15. Verbindungssystem nach einem der Ansprüche 1 bis 14.
**dadurch gekennzeichnet, dass** das Ringelement (10) aus zwei axial hintereinander liegenden Abschnitten (19, 20) besteht, wobei einer der beiden Abschnitte (20), an dem sich ein/das Rastelement (13a) befindet, als segmentierter radial federnder Bereich und der andere, zur Anlage an der Umfangsdichtung (3, 3a) bestimmte Abschnitt (19) als massiver geschlossener Bereich gestaltet ist.

16. Verbindungssystem nach einem der Ansprüche 1 bis 15,
**dadurch gekennzeichnet, dass** die Ringanordnung (10, 10a, 15, 22) einen Stirnring (10a) umfasst, der zwischen einer Umfangsdichtung (3, 3a, 3b) und dem Ringelement (10) angeordnet ist, wobei an dem Stirnring (10a) ein fünftes Kompensationsvolumen (11a) für die reversible oder irreversible Zunahme der axialen Länge (L) der Umfangsdichtung (3, 3a, 3b) als durch einen von einer Ringstufe (12b) des Stirnrings (10a) begrenzter Ringraum im Aufnahmeraum (4) ausgebildet ist.

17. Verbindungssystem nach einem der Ansprüche 1 bis 16,
**dadurch gekennzeichnet, dass** ein die Permeation durch die Umfangsdichtung (3) bestimmendes Flächen-Permeationslängen-Verhältnis ($A_E$/KL) durch das Verhältnis einer permeationswirksamen Teilumfangsfläche ($A_E$) der Umfangsdichtung (3) zu der Kontaktlänge (KL) gebildet ist, wobei die permeationsbestimmende Teilumfangsfläche ($A_E$) in der Nähe des Spaltes (7) angeordnet und durch eine, insbesondere nicht an den Kupplungsteilen (1, 2) anliegende, Bogenlinie (BL) einer radialen Querschnittsfläche ($A_R$) der durch die Verpressung deformierten Umfangsdichtung (3) bestimmt ist.

18. Verbindungssystem nach Anspruch 17,
**dadurch gekennzeichnet, dass** die Bogenlinie (BL) nicht länger ist als der halbe Wert, vorzugsweise nicht länger als ein Viertel des Wertes, der Summe aus einer Spaltweite (s) des zu verschließenden Spaltes (8) und einer durch die Ringstufe (7, 7a) des Kupplungsteiles (1, 2) bestimmten Tiefe (T) des Aufnahmeraumes (4).

19. Verbindungssystem nach Anspruch 17 oder 18,
**dadurch gekennzeichnet, dass** die permeationsbestimmende Teilumfangsfläche ($A_E$) nicht größer ist als der halbe Wert, vorzugsweise nicht größer als ein Fünftel, einer senkrecht zur axialen Richtung (X-X) verlaufenden Querschnittsfläche ($A_V$) der deformierten Umfangsdichtung (3, 3a, 3b).

20. Verbindungssystem nach einem der Ansprüche 1 bis 19,
**dadurch gekennzeichnet, dass** die Umfangsdichtung (3, 3a, 3b), insbesondere unter der Wirkung einer/der axialen Vorpresskaft ($F_A$), im Aufnahmeraum (4) eine Position einnimmt, in der sie mit einer axial gerichteten Anlagefläche (F) an der Ringstufe (7, 7a) des den Aufnahmeraum (4) ausbildenden Kupplungsteiles (1, 2) anliegt.

21. Verbindungssystem nach einem der Ansprüche 1 bis 20,
**dadurch gekennzeichnet, dass** durch die Ringanordnung (10, 10a, 15, 22), insbesondere durch das Ringelement (10) und/oder die weiteren ringförmigen Teile (10a, 15, 22), mit den Kupplungsteilen (1, 2) Spalte ausgebildet sind, die eine Spaltweite (b, c, d, e, f) aufweisen, welche nicht größer als die Spaltweite (s) des abzudichtenden Spaltes (8) ist.

22. Verwendung eines Verbindungssystems nach einem der Ansprüche 1 bis 21 in einem Kohlendioxid führenden System.

23. Verwendung eines Verbindungssystems nach einem der Ansprüche 1 bis 21 in einer Wasserstoff-Brennstoffzelle.

**Claims**

1. A connection system for fluid-carrying systems, such as lines, fittings or units, to carry a fluid acted upon by a pressure ($p_1$) raised compared with a reference pressure ($p_2$), in particular for systems carrying carbon dioxide, comprising a first coupling part (1), such as a housing part, a second coupling part (2), such as a plug part, pluggable along an axis (X-X) into a receiving opening (6) of the first coupling part (1) by means of a shaft (5), and at least one circumferential seal (3, 3a, 3b), consisting of an elastomer, arranged in a receiving space (4) which is formed circumferentially in one of the two coupling parts (1, 2) and which in an axial direction (X-X) is bounded at one end by an annular step (7, 7a) of the coupling part (1, 2) forming the receiving space (4), wherein for the circumferential seal (3, 3a, 3b) there is a compensation volume (11, 11a, 16, 17, 23) for a reversible or irreversible increase in the axial length (L) of the circumferential seal (3) present in the receiving space (4) and an annular arrangement (10, 10a, 15, 22) is also present which is arranged in an opening (9) of the receiving space (4) and is connected to the coupling part (1, 2), forming the receiving space (4), in a force-locked and/or form-locked manner, **characterised in that** the compensation volume (11, 11 a, 16, 17, 23) is provided by the annular arrangement (10, 10a, 15, 22) by an annular space, bounded by an annular step (12, 12b, 18) of an annular element (10, 15) of the annular arrangement (10, 10a, 15, 22), in the receiving space forming a partial volume of the receiving space (4) as a compensation volume and/or by a distance ring (15), axially (X-X) displaceable and associated with the annular arrangement (10, 10a, 15, 22), and/or a compensation ring (22), associated with the annular arrangement (10, 10a, 15, 22), releasing a partial volume (23) of the receiving space (4) as a compensation volume upon axial displacement (dx, dxx) against an axial pre-pressing force ($F_A$) of a resilient spring element (21).

2. A connection system according to claim 1, **characterised in that** the annular arrangement (10, 10a, 15, 22) is designed in such a manner that at least in the assembled state it produces an axial pre-pressing force ($F_A$) upon the circumferential seal (3, 3a, 3b), preferably owing to the action of the elasticity of the circumferential seal (3, 3a, 3b) under radial pressing and/or through an additional resilient spring element (21).

3. A connection system according to claim 1 or 2, **characterised in that** the annular arrangement (10, 10a, 15, 22) comprises two or more annular parts (10, 15, 22).

4. A connection system according to any one of claims 1 to 3, **characterised in that** the annular arrangement (10, 10a, 15, 22) comprises at least one annular part (10, 15, 22) which is arranged in the receiving space (4) in an axially-movable manner.

5. A connection system according to any one of claims 1 to 4, **characterised in that** the compensation volume (11, 11a, 16, 17, 23) is formed at the annular element (10) and/or at another annular part (10a, 15, 22), arranged in the receiving space (4), of the annular arrangement (10, 10a, 15, 22).

6. A connection system according to claim 4 or 5, **characterised in that** the compensation volume (11, 11a, 16, 17, 23) is freed through an axial displacement (dx, dxx) of the axially-movable annular part (15, 22).

7. A connection system according to any one of claims 1 to 6, **characterised in that** two circumferential seals (3a, 3b) are arranged axially one behind the other in the receiving space (4) and are preferably separated from one another by an axially (x-x) displaceable distance ring (15), of the annular arrangement (10, 10a, 15, 22), arranged therebetween.

8. A connection system according to claim 7, **characterised in that** upon its axial displacement (dx), the distance ring (15) frees, as a partial volume of the receiving space (4), a second compensation volume (16) for the reversible or irreversible increase in the axial length (L) of the circumferential seals (3a, 3b).

9. A connection system according to claim 7 or 8, **characterised in that** a third compensation volume (17) for the reversible or irreversible increase in the axial length (L) of the circumferential seals (3a, 3b) is formed at the distance ring (15) as a partial volume of the receiving space (4).

10. A connection system according to claim 9, **characterised in that** the third compensation volume (17) is formed by an annular space, bounded by an annular step (18) of the distance ring (15), in the receiving space (4).

11. A connection system according to any one of claims 1 to 10, **characterised in that** between the annular element (10) and the circumferential seal (3, 3a, 3b) there is arranged a compensation ring (22), axially displaceable against a resilient spring element (21) which produces a/the axial pre-pressing force ($F_A$) against the inherent elasticity of the circumferential seal (3, 3a, 3b), of the annular arrangement (10, 10a, 15, 22), upon its axial displacement (dxx) this compensation ring (22) freeing as a partial volume of the receiving space (4) a fourth compensation volume (23) for the reversible or irreversible increase in the axial length (L) of the circumferential seal (3, 3a, 3b).

12. A connection system according to any one of claims 1 to 11, **characterised in that** the annular element (10) is locked with the coupling part (1, 2) forming the receiving space (4), wherein the annular element (10) has a locking element (13, 13a), such as a locking projection, and the coupling part (1, 2) has a complementary locking element (14, 14a), such as a locking groove.

13. A connection system according to claim 12, **characterised in that** the locking element (13a) has a height (a) which is greater than a gap width (b) between the annular element (10) and the coupling part (1, 2).

14. A connection system according to any one of claims 1 to 13, **characterised in that** the annular element (10) is slit in an axial direction (X-X) or obliquely thereto, wherein the slitting is preferably such that the annular element (10) is closed in the assembled state.

15. A connection system according to any one of claims 1 to 14, **characterised in that** the annular element (10) consists of two portions (19, 20) lying one behind the other, wherein one of the two portions (20), on which a/the locking element (13a) is located, is fashioned as a segmented, radially elastic region and the other portion (19), destined to rest on the circumferential seal (3, 3a), is fashioned as a solid, closed region.

16. A connection system according to any one of claims 1 to 15, **characterised in that** the annular arrangement (10, 10a, 15, 22) comprises a front ring (10a) which is arranged between a circumferential seal (3, 3a, 3b) and the annular element (10), wherein a fifth compensation volume (11 a) for the reversible or irreversible increase in the axial length (L) of the circumferential seal (3, 3a, 3b) is formed at the front ring (10a) as an annular space, bounded by an annular step (12b) of the front ring (10a), in the receiving space (4).

17. A connection system according to any one of claims 1 to 16, **characterised in that** a surface-permeation length ratio ($A_E/KL$) determining the permeation through the circumferential seal (3) is formed by the ratio of a permeation-effective partial circumferential area ($A_E$) of the circumferential seal (3) to the contact length (KL), wherein the permeation-determining partial circumferential area ($A_E$) is arranged in the vicinity of the gap (7) and is determined by a curved line (BL), in particular not contacting the coupling parts (1, 2), of a radial cross-sectional area ($A_R$) of the circumferential seal (3) deformed by the pressing.

**18.** A connection system according to claim 17, **characterised in that** the curved line (BL) is not longer than half of the value, preferably not longer than a quarter of the value, of the sum of a gap width (s) of the gap (8) to be closed and a depth (T), determined by the annular step (7, 7a) of the coupling part (1, 2), of the receiving space (4).

**19.** A connection system according to claim 17 or 18, **characterised in that** the permeation-determining partial circumferential area ($A_E$) is not greater than half of the value, preferably not greater than a fifth, of a cross-sectional area ($A_V$), running perpendicular to the axial direction (X-X), of the deformed circumferential seal (3, 3a, 3b).

**20.** A connection system according to any one of claims 1 to 19, **characterised in that** the circumferential seal (3, 3a, 3b) occupies, in particular under the effect of a/the axial pre-pressing force ($F_A$), a position in the receiving space (4) in which with an axially directed contact surface (F) it rests against the annular step (7, 7a) of the coupling part (1, 2) forming the receiving space (4).

**21.** A connection system according to any one of claims 1 to 20, **characterised in that** gaps are formed with the coupling parts (1, 2) by the annular arrangement (10, 10a, 15, 22), in particular by the annular element (10) and/or the further annular parts (10a, 15, 22), which gaps have a gap width (b, c, d, e, f) not greater than the gap width (s) of the gap (8) to be sealed.

**22.** Use of a connection system according to any one of claims 1 to 21 in a system carrying carbon dioxide.

**23.** Use of a connection system according to any one of claims 1 to 21 in a hydrogen fuel cell.

**Revendications**

**1.** Système de connexion pour des systèmes de transport de fluides, tels que des conduites, des robinets ou des ensembles, lesquels sont destinés au transport d'un fluide soumis à l'action d'une pression ($p_1$) élevée par rapport à une pression de comparaison ($p_2$), en particulier pour des systèmes de transport de dioxyde de carbone, comportant une première partie de couplage (1), telle qu'une partie de boîtier, une deuxième partie de couplage (2) pouvant être insérée avec une tige (5) le long d'un axe (X-X) dans un orifice de réception (6) de la première partie de couplage (1), telle qu'une partie d'insertion, et au moins une garniture d'étanchéité périphérique (3, 3a, 3b) constituée d'un élastomère, laquelle est disposée dans un espace de réception (4) qui est réalisé selon le pourtour dans une des deux parties de couplage (1, 2) et qui est délimité dans la direction axiale (X-X) du côté d'une extrémité par un épaulement annulaire (7, 7a) de la partie de couplage (1, 2) réalisant l'espace de réception (4), dans lequel pour la garniture d'étanchéité périphérique (3, 3a, 3b), un volume de compensation (11, 11a, 16, 17, 23) pour une augmentation réversible ou irréversible de la longueur axiale (L) de la garniture d'étanchéité périphérique (3) est présent dans l'espace de réception (4) ainsi qu'un ensemble annulaire (10, 10a, 15, 22), lequel est disposé dans un orifice (9) de l'espace de réception (4) et est relié par complémentarité de forme et/ou à force à la partie de couplage (1, 2) réalisant l'espace de réception (4), **caractérisé en ce que** le volume de compensation (11, 11a, 16, 17, 23) est fourni par l'ensemble annulaire (10, 10a, 15, 22), **en ce qu'**un espace annulaire délimité par un épaulement annulaire (12, 12b, 18) d'un élément annulaire (10, 15) de l'ensemble annulaire (10, 10a, 15, 22) forme dans l'espace de réception (4) un volume partiel de l'espace de réception (4) en tant que volume de compensation, et/ou **en ce qu'**une bague d'écartement (15) pouvant être déplacée par coulissement axialement (X-X), associée à l'ensemble annulaire (10, 10a, 15, 22) et/ou une bague de compensation (22) associée à l'ensemble annulaire (10, 10a, 15, 22) libère un volume partiel (23) de l'espace de réception (4) en tant que volume de compensation lors d'un déplacement par coulissement (dx, dxx) contre une force de compression axiale ($F_A$) d'un élément formant ressort élastique (21).

**2.** Système de connexion selon la revendication 1, **caractérisé en ce que** l'ensemble annulaire (10, 10a, 15, 22) est réalisé de telle manière qu'il génère au moins dans l'état de montage une force de compression axiale ($F_A$) sur la garniture d'étanchéité périphérique (3, 3a, 3b), de préférence du fait de l'effet d'élasticité de la garniture d'étanchéité périphérique (3, 3a, 3b) sous compression radiale et/ou par un élément formant ressort (21) élastique supplémentaire.

**3.** Système de connexion selon la revendication 1 ou 2, **caractérisé en ce que** l'ensemble annulaire (10, 10a, 15, 22) comporte deux parties annulaires (10, 15, 22) ou plus.

**4.** Système de connexion selon l'une quelconque des revendications 1 à 3, **caractérisé en ce que** l'ensemble annulaire (10, 10a, 15, 22) comporte au moins une partie annulaire (10, 15, 22), qui est disposée de manière mobile axialement dans l'espace de réception (4).

**5.** Système de connexion selon l'une quelconque des revendications 1 à 4,

**caractérisé en ce que** le volume de compensation (11, 11a, 16, 17, 23) est réalisé au niveau de l'élément annulaire (10) et/ou au niveau d'une autre pièce annulaire (10a, 15, 22) de l'ensemble annulaire (10, 10a, 15, 22) disposée dans l'espace de réception (4).

6. Système de connexion selon la revendication 4 ou 5, **caractérisé en ce que** le volume de compensation (11, 11a, 16, 17, 23) est libéré par un déplacement par coulissement axial (dx, dxx) de la partie annulaire (15, 22) mobile axialement.

7. Système de connexion selon l'une quelconque des revendications 1 à 6, **caractérisé en ce que** deux garnitures d'étanchéité périphériques (3a, 3b) sont disposées l'une derrière l'autre axialement dans l'espace de réception (4) et sont séparées l'une de l'autre de préférence par une bague d'écartement (15) de l'ensemble annulaire (10, 10a, 15, 22), disposée entre les deux garnitures d'étanchéité périphériques et pouvant être déplacée par coulissement axialement (X-X).

8. Système de connexion selon la revendication 7, **caractérisé en ce que** la bague d'écartement (15) libère lors de son déplacement par coulissement axial (dx), en tant que volume partiel de l'espace de réception (4), un deuxième volume de compensation (16) pour l'augmentation réversible ou irréversible de la longueur axiale (L) des garnitures d'étanchéité périphériques (3a, 3b).

9. Système de connexion selon la revendication 7 ou 8, **caractérisé en ce qu'**un troisième volume de compensation (17) pour l'augmentation réversible ou irréversible de la longueur axiale (L) des garnitures d'étanchéité périphériques (3a, 3b) est réalisé au niveau de la bague d'écartement (15) en tant que volume partiel de l'espace de réception (4).

10. Système de connexion selon la revendication 9, **caractérisé en ce que** le troisième volume de compensation (17) est formé dans l'espace de réception (4) par un espace annulaire délimité par un épaulement annulaire (18) de la bague d'écartement (15).

11. Système de connexion selon l'une quelconque des revendications 1 à 10, **caractérisé en ce qu'**une bague de compensation (22) de l'ensemble annulaire (10, 10a, 15, 22), pouvant être déplacée par coulissement axialement contre un élément formant ressort (21) élastique, lequel génère une/la force de compression axiale ($F_A$) contre la propre élasticité de la garniture d'étanchéité périphérique (3, 3a, 3b), est disposée entre l'élément annulaire (10) et la garniture d'étanchéité périphérique (3, 3a, 3b), laquelle bague de compensation libère lors de son déplacement par coulissement axial (dxx) en tant que volume partiel de l'espace de réception (4), un quatrième volume de compensation (23) pour l'augmentation réversible ou irréversible de la longueur axiale (L) de la garniture d'étanchéité périphérique (3, 3a, 3b).

12. Système de connexion selon l'une quelconque des revendications 1 à 11, **caractérisé en ce que** l'élément annulaire (10) est enclenché avec la partie de couplage (1, 2) réalisant l'espace de réception (4), dans lequel l'élément annulaire (10) présente un élément d'enclenchement (13, 13a), tel qu'un ergot d'enclenchement, et que la partie de couplage (1, 2) présente un élément d'enclenchement (14, 14a) complémentaire, tel qu'une rainure d'enclenchement.

13. Système de connexion selon la revendication 12, **caractérisé en ce que** l'élément d'enclenchement (13a) présente une hauteur (a) qui est plus grande qu'une largeur de fente (b) entre l'élément annulaire (10) et la partie de couplage (1, 2).

14. Système de connexion selon l'une quelconque des revendications 1 à 13, **caractérisé en ce que** l'élément annulaire (10) est entaillé dans la direction axiale (X-X) ou de manière oblique par rapport à celle-ci, dans lequel l'entaille est de préférence réalisée de telle manière que l'élément annulaire (10) est fermé à l'état monté.

15. Système de connexion selon l'une quelconque des revendications 1 à 14, **caractérisé en ce que** l'élément annulaire (10) est constitué de deux sections (19, 20) se trouvant axialement l'une derrière l'autre, dans lequel une des deux sections (20), au niveau de laquelle se trouve un/l'élément d'enclenchement (13a), est configurée comme une zone radialement à ressorts segmentée et que l'autre section (19) destinée à venir en appui au niveau de la garniture d'étanchéité périphérique (3, 3a) est configurée comme une zone massive fermée.

16. Système de connexion selon l'une quelconque des revendications 1 à 15, **caractérisé en ce que** l'ensemble annulaire (10, 10a, 15, 22) comporte une bague frontale (10a), qui est disposée entre une garniture d'étanchéité périphérique (3, 3a, 3b) et un élément annulaire (10), dans lequel un cinquième volume de compensation (11a) pour l'augmentation réversible ou irréversible de la longueur axiale (L) de la garniture d'étanchéité périphérique (3, 3a, 3b) est réalisé dans l'espace de réception (4) au niveau de la bague frontale (10a) sous la forme d'un espace annulaire délimité par un épaulement annulaire (12b) de la bague frontale (10a).

17. Système de connexion selon l'une quelconque des revendications 1 à 16,
**caractérisé en ce qu'**un rapport longueurs de perméation-surfaces ($A_E$/KL) déterminant la perméation par la garniture d'étanchéité périphérique (3) est formé par le rapport entre une surface périphérique partielle ($A_E$) active par perméation de la garniture d'étanchéité périphérique (3) et une longueur de contact (KL), dans lequel la surface périphérique partielle ($A_E$) déterminant la perméation est disposée à proximité de la fente (7) et est déterminée par une ligne courbe (BL), ne reposant pas en particulier contre les parties de couplage (1, 2), d'une surface de section transversale ($A_R$) radiale de la garniture d'étanchéité périphérique (3) déformée par la compression.

18. Système de connexion selon la revendication 17,
**caractérisé en ce que** la ligne courbe (BL) n'est pas plus longue que la moitié de la valeur, de préférence qu'un quart de la valeur, de la somme d'une largeur de fente (s) de la fente (8) à fermer et d'une profondeur (T) de l'espace de réception (4), déterminée par l'épaulement annulaire (7, 7a) de la partie de couplage (1, 2).

19. Système de connexion selon la revendication 17 ou 18,
**caractérisé en ce que** la surface périphérique partielle ($A_E$) déterminant la perméation n'est pas plus grande que la moitié de la valeur, de préférence que le cinquième, d'une surface de section transversale ($A_V$) s'étendant de manière perpendiculaire par rapport à la direction axiale (X-X) de la garniture d'étanchéité périphérique (3, 3a, 3b) déformée.

20. Système de connexion selon l'une quelconque des revendications 1 à 19,
**caractérisé en ce que** la garniture d'étanchéité périphérique (3, 3a, 3b) prend en particulier sous l'action d'une/de la force de compression axiale ($F_A$) dans l'espace de réception (4) une position dans laquelle elle repose par une surface d'appui (F) orientée axialement contre l'épaulement annulaire (7, 7a) de la partie de couplage (1, 2) réalisant l'espace de réception (4).

21. Système de connexion selon l'une quelconque des revendications 1 à 20,
**caractérisé en ce que** des fentes sont réalisées avec les parties de couplage (1, 2) par l'ensemble annulaire (10, 10a, 15, 22), en particulier par l'élément annulaire (10) et/ou par les autres parties annulaires (10a, 15, 22), lesquelles fentes présentent une largeur de fente (b, c, d, e, f), qui n'est pas plus grande que la largeur de fente (s) de la fente (8) à étanchéifier.

22. Utilisation d'un système de connexion selon l'une quelconque des revendications 1 à 21 dans un système transportant du dioxyde de carbone.

23. Utilisation d'un système de connexion selon l'une quelconque des revendications 1 à 21 dans une pile à combustible à hydrogène.

Fig.1

# Fig.2

EP 2 077 410 B1

Fig.3

Fig.4

EP 2 077 410 B1

Fig.5

Fig.6

EP 2 077 410 B1

# Fig.7

EP 2 077 410 B1

Fig.8

Fig.9

Fig.10

# Fig.11

EP 2 077 410 B1

Fig.12

Fig.13

Fig.14

Fig.16

Fig.15

Fig.17

Fig.18

Fig.19

Fig. 20

EP 2 077 410 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1351006 A
- US 5161834 A
- WO 2006051071 A
- WO 20061051071 A
- EP 1335161 A
- EP 1335161 A1
- EP 1548348 A1
- WO A A